Europäisches Patentamt

European Patent Office

Office européen des brevets

(19)

(11) EP 0 930 751 B1

(12) EUROPEAN PATENT SPECIFICATION

(45) Date of publication and mention
of the grant of the patent:
**12.11.2003 Bulletin 2003/46**

(51) Int Cl.⁷: **H04L 27/26**, H04L 25/02

(21) Application number: **98300332.8**

(22) Date of filing: **19.01.1998**

(54) **Method and apparatus for receiving orthogonal frequency division multiplexed signal**

Anordnung zur Symbolsynchronisierung in einem OFDM-Übertragungssystem unter Verwendung der Eigenschaften eines Kommunikationskanals

Dispositif de synchronisation par symbole dans un système MDFO utilisant des carctéristiques du canal de communication

(84) Designated Contracting States:
**DE FR GB**

(43) Date of publication of application:
**21.07.1999 Bulletin 1999/29**

(73) Proprietor: **VICTOR COMPANY OF JAPAN, LIMITED**
**Yokohama-shi, Kanagawa 221-0022 (JP)**

(72) Inventor: **Kaneko, Keiichi**
**Atsugi-shi, Kanagawa-ken (JP)**

(74) Representative: **Senior, Alan Murray**
**J.A. KEMP & CO.,**
**14 South Square,**
**Gray's Inn**
**London WC1R 5JJ (GB)**

(56) References cited:
**EP-A- 0 453 203        EP-A- 0 683 576**
**EP-A- 0 736 986        EP-A- 0 765 059**
**EP-A- 0 795 985        WO-A-96/19056**

• **DATABASE WPI Section EI, Week 9817 Derwent**
**Publications Ltd., London, GB; Class W01, AN**
**98-193992 XP002072200 -& WO 98 10547 A**
**(TELIA AB)**

**Description**

This invention relates to a method of receiving an orthogonal frequency division multiplexed (OFDM) signal. This invention also relates to an apparatus for receiving an orthogonal frequency division multiplexed (OFDM) signal.

Some of systems for transmitting digital information signals such as digital video signals in limited frequency bands employ orthogonal frequency division multiplexing (OFDM). Examples of digital information signals handled by such OFDM-based transmitting systems are multi-value modulation signals or 256-QAM (quadrature amplitude modulation) signals. In general, OFDM-based transmission is good in suppressing multipath effects and jamming signal effects. Further, the OFDM-based transmission has a good efficiency of frequency use.

Orthogonal frequency division multiplexing (OFDM) employs multiple carriers which are orthogonal with respect to each other. The multiple carriers are modulated in accordance with digital information pieces to be transmitted, respectively. The modulation-resultant multiple carriers are combined into an OFDM signal which has a form as a random signal. Generally, inverse fast Fourier transform (IFFT) is used in generating an OFDM signal. The "orthogonal" multiple carriers mean that the spectrums of carriers neighboring one carrier are null at the frequency of the latter carrier.

It is a first object of this invention to provide an improved method of receiving an orthogonal frequency division multiplexed (OFDM) signal.

It is a second object of this invention to provide an improved apparatus for receiving an orthogonal frequency division multiplexed (OFDM) signal.

A first object of this invention provides a method of receiving an orthogonal frequency division multiplexed (OFDM) signal containing information and a reference signal, the method comprising the steps of receiving an OFDM signal via a transmission line; generating a symbol sync signal in response to the received OFDM signal; setting a time window for every symbol in response to the generated symbol sync signal; extracting a time segment of the received OFDM signal which extends in the time window; subjecting the extracted time segment of the received OFDM signal to discrete Fourier transform to recover transmitted information and a reference signal; periodically calculating coefficients representative of characteristics of the transmission line from the recovered reference signal; periodically calculating approximate phase differences between carriers in respective pairs among carriers of the received OFDM signal on the basis of the calculated coefficients; periodically calculating an accumulation value of the calculated approximate phase differences; comparing the currently-calculated accumulation value and the previously-calculated accumulation value; and controlling the phase of the time window relative to a symbol in response to a result of the comparison between the currently-calculated accumulation value and the previously-calculated accumulation value.

A second aspect of this invention provides a method of receiving an orthogonal frequency division multiplexed (OFDM) signal containing information, a symbol order number signal, and a reference signal, the symbol order number signal representing a relation between the OFDM signal and the reference signal, the method comprising the steps of receiving an OFDM signal via a transmission line; generating a symbol sync signal in response to the received OFDM signal; setting a time window for every symbol in response to the generated symbol sync signal; extracting a time segment of the received OFDM signal which extends in the time window; subjecting the extracted time segment of the received OFDM signal to discrete Fourier transform to recover transmitted information and a symbol order number signal; recovering a reference signal from a result of the discrete Fourier transform in response to the symbol order number signal; periodically calculating coefficients representative of characteristics of the transmission line from the recovered reference signal, the calculated coefficients including coefficients which indicate a rate of information transfer from a real part of a transmitter-side carrier to a real part of a receiver-side carrier, a rate of information transfer from an imaginary part of the transmitter-side carrier to an imaginary part of the receiver-side carrier, a rate of information leakage from the real part of the transmitter-side carrier to the imaginary part of the receiver-side carrier, and a rate of information leakage from the imaginary part of the transmitter-side carrier to the real part of the receiver-side carrier; periodically calculating approximate phase differences between carriers in respective pairs among carriers of the received OFDM signal on the basis of the calculated coefficients; periodically calculating an accumulation value of the calculated approximate phase differences; comparing the currently-calculated accumulation value and the previously-calculated accumulation value; and controlling the phase of the time window relative to a symbol in response to a result of the comparison between the currently-calculated accumulation value and the previously-calculated accumulation value.

A third aspect of this invention provides an apparatus for receiving an orthogonal frequency division multiplexed (OFDM) signal containing information and a reference signal, the apparatus comprising means for receiving an OFDM signal via a transmission line; means for generating a symbol sync signal in response to the received OFDM signal; means for setting a time window for every symbol in response to the generated symbol sync signal; means for extracting a time segment of the received OFDM signal which extends in the time window; means for subjecting the extracted time segment of the received OFDM signal to discrete Fourier transform to recover transmitted information and a reference signal; means for periodically calculating coefficients representative of characteristics of the transmission line from the recovered reference signal; means for periodically calculating approximate phase differences between carriers in respective pairs among carriers of the received OFDM signal on the basis of the calculated coefficients; means for periodically calculating an accumulation value of the calculated approximate phase differences; means for comparing the currently-calculated accumulation value and the previously-calculated accumulation value; and means for controlling the phase of the time window relative to a symbol in response to a result of the comparison between the currently-calculated accumulation value and the previously-calculated accumulation value.

A fourth aspect of this invention provides an apparatus for receiving an orthogonal frequency division multiplexed (OFDM) signal containing information, a symbol order number signal, and a reference signal, the symbol order number signal representing a relation between the OFDM signal and the reference signal, the apparatus comprising means for receiving an OFDM signal via a transmission line; means for generating a symbol sync signal in response to the received OFDM signal; means for setting a time window for every symbol in response to the generated symbol sync signal; means for extracting a time segment of the received OFDM signal which extends in the time window; means for subjecting the extracted time segment of the received OFDM signal to discrete Fourier transform to recover transmitted information and a symbol order number signal; means for recovering a reference signal from a result of the discrete Fourier transform in response to the symbol order number signal; means for periodically calculating coefficients representative of characteristics of the transmission line from the recovered reference signal, the calculated coefficients including coefficients which indicate a rate of information transfer from a real part of a transmitter-side carrier to a real part of a receiver-side carrier, a rate of information transfer from an imaginary part of the transmitter-side carrier to an imaginary part of the receiver-side carrier, a rate of information leakage from the real part of the transmitter-side carrier to the imaginary part of the receiver-side carrier, and a rate of information leakage from the imaginary part of the transmitter-side carrier to the real part of the receiver-side carrier; means for periodically calculating approximate phase differences between carriers in respective pairs among carriers of the received OFDM signal on the basis of the calculated coefficients; means for periodically calculating an accumulation value of the calculated approximate phase differences; means for comparing the currently-calculated accumulation value and the previously-calculated accumulation value; and means for controlling the phase of the time window relative to a symbol in response to a result of the comparison between the currently-calculated accumulation value and the previously-calculated accumulation value.

Fig. 1 is a time-domain diagram showing an example of the waveform of a baseband OFDM signal.

Fig. 2 is a time-domain diagram of a symbol interval "ta", a guard interval "gi", and an effective symbol interval "ts".

Fig. 3 is a time-domain diagram of a desired wave, a ghost wave, and symbol sync signals.

Fig. 4 is a block diagram of a signal transmitting apparatus using orthogonal frequency division multiplexing (OFDM) according to an embodiment of this invention.

Fig. 5 is a block diagram of a signal receiving apparatus using orthogonal frequency division multiplexing (OFDM) according to the embodiment of this invention.

Fig. 6 is a block diagram of a DFT QAM decoding circuit in Fig. 5.

Fig. 7 is a diagram of the relation between the phases $\theta_{+10}$ and $\theta_{+20}$ of 10-th and 20-th positive carriers recovered in a receiver side.

Fig. 8 is a block diagram of a guard interval processing circuit in Fig. 5.

Fig. 9 is a time-domain diagram of various signals in the signal receiving apparatus of Fig. 5.

Fig. 10 is a block diagram of an adjustment circuit in Fig. 8.

Fig. 11 is a flowchart of a program for a CPU in the DFT QAM decoding circuit in Fig. 6.

Fig. 12 is a time-domain diagram of a symbol interval, a pre-guard-interval "C", an effective symbol interval "B", and a post-guard-interval "A".

## Background

The background of the invention will be explained hereinafter for a better understanding of this invention.

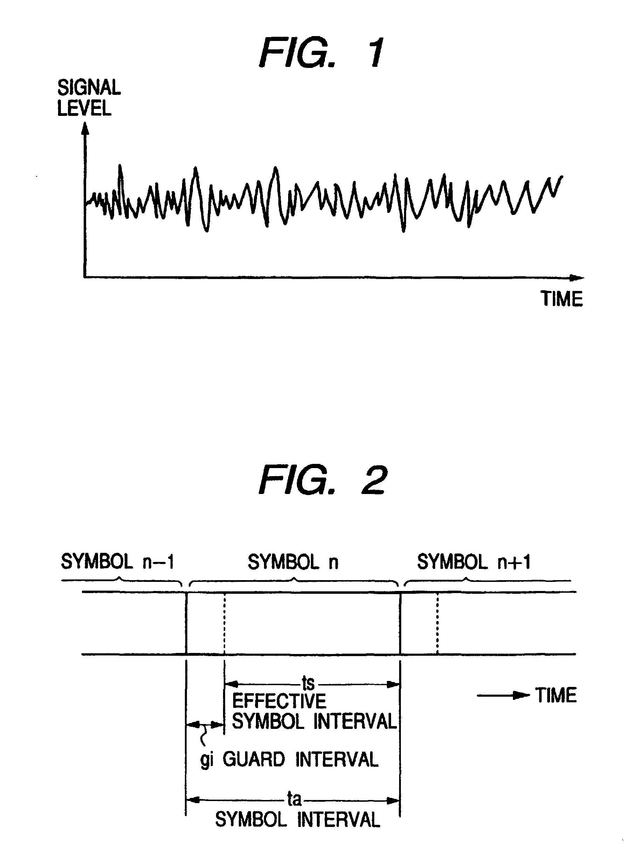

A baseband OFDM signal is composed of multiple orthogonal baseband carriers which have been modulated in accordance with transmitted information pieces respectively. The baseband OFDM signal has a time-base waveform such as shown in Fig. 1.

Data transmission (information transmission) based on OFDM is executed symbol by symbol. As shown in Fig. 2, each OFDM transmission symbol interval "ta" is composed of a guard interval "gi" and an effective symbol interval "ts". The guard interval "gi" precedes the effective symbol interval "ts". The guard interval "gi" is used for reducing multipath effects. The effective symbol interval "ts" is used for transmitting information (data). The waveform of a time segment of an OFDM signal transmitted during the guard interval "gi" is a copy of a part (for example, an end part or a later part) of the waveform of a time segment of the OFDM signal transmitted during the effective symbol interval "ts".

The frequency intervals between the multiple carriers in the baseband OFDM signal are equal to the reciprocal of the effective symbol interval "ts". To provide effective signal amplitudes at respective sampling points spaced at periods equal to the effective symbol interval "ts" divided by N, a transmitter side subjects N complex-number data pieces to N-point IDFT (inverse discrete Fourier transform) in frequency domain for every symbol interval "ta". Thereby, the transmitter side generates every 1-symbol-corresponding time segment of a baseband OFDM signal containing the data pieces.

A receiver side repetitively samples a baseband OFDM signal at a period equal to the effective symbol interval "ts" divided by N, and thereby generates N samples of the baseband OFDM signal for every symbol interval "ta". The receiver side subjects the N signal samples to N-point DFT (discrete Fourier transform) for every symbol interval "ta", calculating the phases and the amplitudes of respective carrier components and thereby recovering N complex-number data pieces.

The receiver side sets a time window for every symbol interval "ta". In general, the time window is referred to as the DFT window. The receiver side implements DFT on signal samples available in each DFT window. The receiver side designates the time position of each DFT window relative to the corresponding symbol interval "ta" in response to a symbol sync signal.

An example of a way of generating a symbol sync signal uses the following technique. Spaced symbols occurring at a given period are used as null symbols (signal-less intervals). A symbol sync signal is recovered in response to the null symbols. Generally, a recovered symbol sync signal is allowed to have an error of less than several samples with respect to the boundaries between symbols.

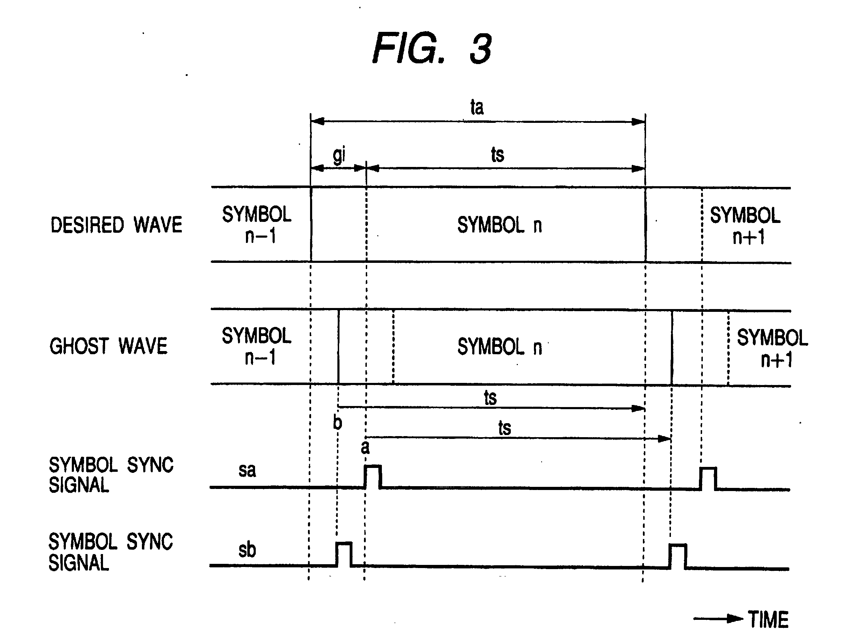

It is assumed that a receiver side receives a desired wave and also a ghost wave which delays from the desired wave as shown in Fig. 3. Normally, a symbol sync signal "sa" is generated which has a train of pulses equal in timing with starting moments "a" of effective symbol intervals "ts" of the desired wave. A DFT window is designated in response to each pulse of the symbol sync signal "sa". For every symbol, signal sampling is started at the starting moment "a" of an effective symbol interval "ts", and is continued until the DFT window terminates (that is, the effective symbol interval "ts" terminates). For every symbol, DFT is implemented on signal samples available in the DFT window.

With reference to Fig. 3, regarding the ghost wave, every symbol interval "ta" starts at moments "b". A symbol "n" in the desired wave does not receive interference from a preceding symbol "n-1" during the interval between the related moments "b" and "a". Accordingly, the symbol sync signal "sa" may be replaced by a symbol sync signal "sb" which has a train of pulses equal in timing with the starting moments "b" of symbol intervals "ta" of the ghost wave. Furthermore, another symbol sync signal is useful which has a train of pulses equal in timing with given points between the moments "b" and "a".

Generally, the guard interval "gi" is set longer than the delay time of a ghost wave relative to a desired wave. In this case, a great timing error in a symbol sync signal is allowed.

European patent application EP 0765059 A2 discloses that a transmitter side adds a reference signal to an OFDM signal containing information to be transmitted. The reference signal represents known reference data. The transmitter side transmits the reference-signal-added OFDM signal to a receiver side via a transmission line. The receiver side recovers the reference signal from the OFDM signal. The receiver side detects the characteristics of the transmission line by referring to the reference signal. Errors of a recovered in-phase signal (a recovered I signal) and a recovered quadrature signal (a recovered Q signal) depend on the characteristics of the transmission line. Thus, the receiver side corrects the recovered I signal and the recovered Q signal in response to the detected characteristics of the transmission line. This correction enables accurate recovery of the information.

In European patent application EP 0765059 A2, to reduce adverse affection of noise on a received reference signal, the reference signal is transmitted by using plural adjacent carriers. Coefficients of the characteristics of the transmission line are calculated in relation to the adjacent carriers, respectively. The calculated coefficients are averaged or filtered into an indication of the detected characteristics of the transmission line.

Such coefficients related to different carriers have a nonlinear relation with each other. Accordingly, the simple mean value among the coefficients deviates from a correct value for the characteristics of the transmission line. Such a relation among coefficients related to different carriers depends on, for example, errors of symbol sync positions.

In an OFDM signal generated by 512-point IFFT, an n-th carrier has "n" periods during every effective symbol interval "ts". In other words, the n-th carrier has a phase change of $2\pi \cdot n$ radians for every effective symbol interval "ts". Thus, the n-th carrier has a phase change of $(2\pi \cdot n)/512$ radians for every sample. Accordingly, if there is a one-sample error, it is desirable to correct the phase of the n-th carrier by $(2\pi \cdot n)/512$. An (n+1)-th carrier has "n+1" periods during every effective symbol interval "ts". In other words, the (n+1)-th carrier has a phase change of $2\pi \cdot (n+1)$ radians for every effective symbol interval "ts". Thus, the (n+1)-th carrier has a phase change of $\{2\pi \cdot (n+1)\}/512$ radians for every sample. Accordingly, if there is a one-sample error, it is desirable to correct the phase of the (n+1)-th carrier by $\{2\pi \cdot (n+1)\}/512$. The difference between the phase correction values related to the n-th carrier and the (n+1)-th carrier is given as follows.

$$[\{2\pi \cdot (n+1)\}/512] - \{(2\pi \cdot n)/512\} = 2\pi/512 \text{ (radian)}$$

If there are X-sample errors, the difference between the phase correction values related to the n-th carrier and the (n+1)-th carrier is equal to X times $2\pi/512$ radians.

In the case where the simple mean value among coefficients related to different carriers is used as an indication of the characteristics of the transmission line, it is important to reduce symbol sync errors to make the indication accurate.

Accordingly, it is a main object of this invention to reduce symbol sync errors.

Embodiment

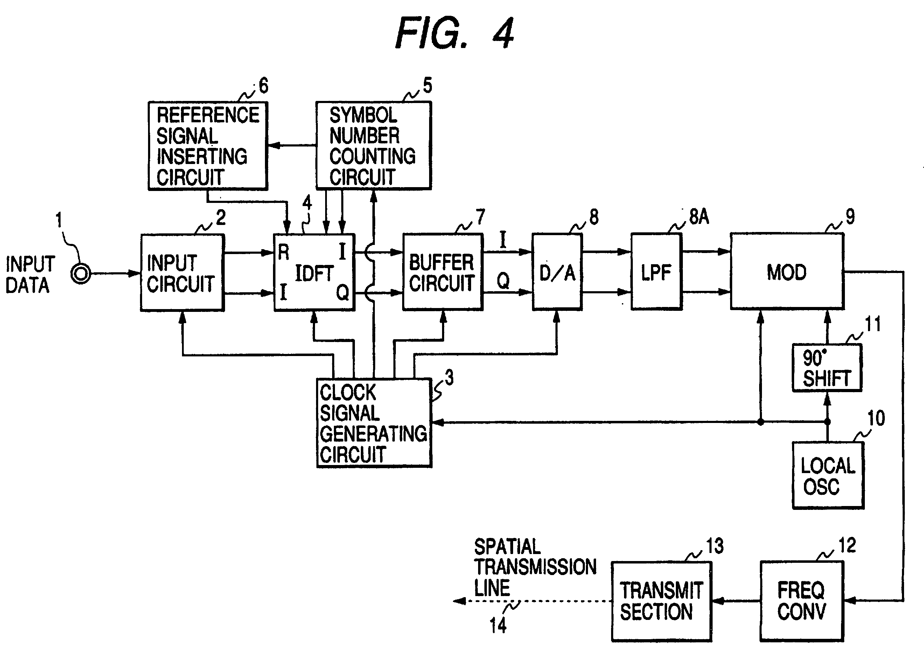

Fig. 4 shows a signal transmitting apparatus using orthogonal frequency division multiplexing (OFDM) according to an embodiment of this invention. Digital data transmitted by the signal transmitting apparatus of Fig. 4 is equal to, for example, a combination of a compressed video signal and a compressed audio signal.

OFDM uses multiple carriers having an orthogonal relationship with each other. In OFDM data transmission, independent digital information pieces are transmitted by using multiple carriers respectively. Since the carriers are orthogonal with each other, the levels of the spectrums of carriers neighboring a given carrier are nullified at a point corresponding to the frequency of the given carrier.

An IDFT (inverse discrete Fourier transform) circuit is used to generate a set of multiple orthogonal carriers. A baseband OFDM signal can be generated by executing inverse discrete Fourier transform (IDFT) using N complex numbers during a time interval T. Points of the IDFT correspond to modulation signal outputs respectively.

An example of basic specifications of the signal transmitting apparatus of Fig. 4 is as follows. The central carrier frequency in an RF band is equal to 100 MHz. The number of carriers for data transmission is equal to 248. It should be noted that this carrier number is merely an example. The modulation is of the 256-QAM OFDM type. The number of used carriers is equal to 257. The used carriers are spaced at equal frequency intervals. A central-frequency carrier among the 257 carriers is defined as a carrier having a frequency F0 which is the center among the frequencies of the 257 carriers. The 128 carriers extending on an upper side of the central-frequency carrier in frequency domain are referred to as the positive carriers. The 128 carriers extending on a lower side of the central-frequency carrier in frequency domain are referred to as the negative carriers.

With reference to Fig. 4, a digital information signal in the form of a bit stream is fed via an input terminal 1 to an input circuit 2. The digital information signal represents main information to be transmitted. The digital information signal results from, for example, compressing an audio information signal, a video information signal, or a video/audio information signal according to an MPEG encoding process. The input circuit 2 adds an error correction code (ECC) to the digital information signal in response to a clock signal fed from a clock signal generating circuit 3.

The input circuit 2 subjects the resultant ECC-added digital information signal to serial-to-parallel (S/P) conversion in response to the clock signal fed from the clock signal generating circuit 3. During the S/P conversion, the digital information signal is divided into blocks corresponding to modulating signals for 256 QAM. The input circuit 2 outputs the modulating signals. According to 256 QAM, 16 different levels are defined in an amplitude direction while 16 different levels are defined in an angle direction. In addition, 256 different digital states are assigned to the 256 levels (16 levels multiplied by 16 levels) respectively.

As previously described, for example, 248 carriers among the 257 carriers are used for transmitting main data (main information). The 9 remaining carriers are used for transmitting other signals including a symbol order number signal and pilot signals.

The input circuit 2 outputs 248-byte digital data for every 1-symbol interval. In more detail, the input circuit 2 outputs a first set of 248 parallel digital signals each having 4 bits, and a second set of 248 parallel digital signals each having 4 bits for every 1-symbol interval. The first set and the second set correspond to a real part and an imaginary part (an in-phase signal and a quadrature signal, that is, an I signal and a Q signal) respectively.

The 248 output signals from the input circuit 2 in each of the real part and the imaginary part are fed to an IDFT (inverse discrete Fourier transform) device 4. The IDFT device 4 operates in response to a clock signal fed from the clock signal generating circuit 3. The IDFT device 4 is of the type capable of processing N parallel signals, where N denotes a natural number equal to 512 which is defined as a period. A main portion of the IDFT device 4 has a set of 512 input terminals for the real part and also a set of 512 input terminals for the imaginary part. The 248 output signals from the input circuit 2 in the real part are applied to 248 IDFT-device input terminals among the 512 input terminals for the real part, respectively. The 248 output signals from the input circuit 2 in the imaginary part are applied to 248 IDFT-device input terminals among the 512 input terminals for the imaginary part, respectively. Regarding each of the real part and the imaginary part, a major portion of the operation of the IDFT device 4 corresponds to subjecting 248 carriers to 256 QAM responsive to the 248 output signals from the input circuit 2 respectively. Regarding the 248 output signals from the input circuit 2, the IDFT device 4 generates the 248 modulation-resultant signals in each of the real part and the imaginary part. The IDFT device 4 combines the 248 modulation-resultant signals and other modulation-resultant signals of the real part into a multiplexing-resultant signal corresponding to the real part. The IDFT device 4 outputs the multiplexing-resultant signal corresponding to the real part. Also, the IDFT device 4 combines the 248 modulation-resultant signals and other modulation-resultant signals of the imaginary part into a multiplexing-resultant signal corresponding to the imaginary part. The IDFT device 4 outputs the multiplexing-resultant signal corresponding to the imaginary part.

The 512 input terminals of the main portion of the IDFT device 4 for each of the real part and the imaginary part correspond to 512 different carriers respectively. Real-part information pieces applied to the input terminals of the main portion of the IDFT device 4 for the real part and imaginary-part information pieces applied to the input terminals of the main portion of the IDFT device 4 for the imaginary part are transmitted by the corresponding carriers respectively.

The 512 input terminals of the main portion of the IDFT device 4-for each of the real part and the imaginary part are sequentially numbered as "n=0, 1, 2, 3, ⋯, 510, 511". The 0-th input terminals (n=0) of the main portion of the IDFT device 4 for the real part and the imaginary part correspond to the central-frequency carrier. A given dc voltage is applied to the 0-th input terminals (n=0) of the main portion of the IDFT device 4 for the real part and the imaginary part to enable the central-frequency carrier to represent a reference-frequency signal. The 1-st input terminals (n=1) to the 128-th input terminals (n=128) of the main portion of the IDFT device 4 for the real part and the imaginary part correspond to the 128 carriers located in an upper side of the central-frequency carrier, that is, correspond to the 128 positive carriers. The 384-th input terminals (n=384) to the 511-th input terminals (n=511) of the main portion of the IDFT device 4 for the real part and the imaginary part correspond to the 128 carriers located in a lower side of the central-frequency carrier, that is, correspond to the 128 negative carriers. The 128-th input terminals (n=128) and the 384-th input terminals (n=384) of the main portion of the IDFT device 4 for the real part and the imaginary part correspond to edge-frequency carriers having given simple relations with a Nyquist frequency. A fixed voltage is applied to the 128-th input terminals (n=128) and the 384-th input terminals (n=384) of the main portion of the IDFT device 4 for the real part and the imaginary part to enable the edge-frequency carriers to represent pilot signals. The 248 output signals from the input circuit 2 in the real part are applied to 248 input terminals among the 1-st input terminals (n=1) to the 127-th input terminals (n=127) and the 385-th input terminals (n=385) to the 511-th input terminals (n=511) of the main portion of the IDFT device 4 for the real part, respectively. The 248 output signals from the input circuit 2 in the imaginary part are applied to 248 input terminals among the 1-st input terminals (n=1) to the 127-th input terminals (n=127) and the 385-th input terminals (n=385) to the 511-th input terminals (n=511) of the main portion of the IDFT device 4 for the imaginary part, respectively. Thus, the 248 output signals from the input circuit 2 in each of the real part and the imaginary part are transmitted by the 248 carriers respectively. A ground potential or a signal of "0" is applied to the 129-th input terminals (n=129) to the 383-rd input terminals (n=383) of the main portion of the IDFT device 4 for each of the real part and the imaginary part to nullify the corresponding carriers.

A symbol number counting circuit 5 counts symbol-corresponding pulses of a clock signal fed from the clock signal generating circuit 3, thereby generating an 8-bit signal representing a symbol order number updated for every symbol. Specifically, the symbol order number represented by the 8-bit signal periodically and cyclically varies as "0", "1", "2", "3", ⋯, "255", "0", "1", "2", "3", ⋯. The symbol number counting circuit 5 outputs the 8-bit symbol order number signal to a reference signal inserting circuit 6. Here, 256 successive symbol intervals "ta" are defined as a 1-frame interval. Accordingly, one cycle of the symbol order number corresponds to a 1-frame interval.

The symbol number counting circuit 5 halves the 8-bit symbol order number signal into 4-bit symbol order number signals. The symbol number counting circuit 5 applies the 4-bit symbol order number signals to real-part and imaginary-part input terminals in a specified pair among pairs of the real-part and imaginary-part input terminals of the IDFT device 4 which correspond to the respective 256 carriers other than the central-frequency carrier. Thereby, a specified carrier (for example, the first carrier) among the 256 carries other than the central-frequency carrier is assigned to the symbol order number signal. Thus, the specified carrier among the 256 carriers is used for the transmission of the symbol order number signal.

The 256 real-part input terminals and the 256 imaginary part input terminals of the main portion of the IDFT device 4 are 256 pairs corresponding to the respective 256 carriers other than the central-frequency carrier. For every symbol, the reference signal inserting circuit 6 selects two input-terminal pairs from among the 256 input-terminal pairs in the IDFT device 4. The two selected input-terminal pairs correspond to a positive carrier and a negative carrier which are symmetrical in frequency domain with respect to the central carrier frequency F0. The reference signal inserting circuit 6 sequentially and cyclically change the two selected pairs among the 256 input-terminal pairs in response to the 7 higher bits of the 8-bit symbol order number signal. In other words, the two selected input-terminal pairs are designated by the 7 higher bits of the 8-bit symbol order number signal. Accordingly, the two selected input-terminal pairs are repetitively changed from two pairs to other two pairs at a period corresponding to 2 symbols.

The reference signal inserting circuit 6 generates two predetermined reference signals representing given values X and Y respectively. The given values X and Y differ from each other. For each even-numbered symbol, the reference signal inserting circuit 6 applies the reference signal representative of the given value X to the real-part input terminals in the two selected input-terminal pairs in the IDFT device 4 instead of signals normally applied thereto. For each even-numbered symbol, the reference signal inserting circuit 6 applies the reference signal representative of the given value Y to the imaginary-part input terminals in the two selected input-terminal pairs in the IDFT device 4 instead of signals normally applied thereto. For each odd-numbered symbol, the reference signal inserting circuit 6 applies the reference signal representative of the given value X to the imaginary-part input terminals in the two selected input-terminal pairs in the IDFT device 4 instead of signals normally applied thereto. For each odd-numbered symbol, the reference signal inserting circuit 6 applies the reference signal representative of the given value Y to the real-part input terminals in the two selected input-terminal pairs in the IDFT device 4 instead of signals normally applied thereto. The reference signal inserting circuit 6 implements this symbol-dependent change of the reference signal application in response to the lowest bit of the 8-bit symbol order number signal.

During every two successive even-numbered and odd-numbered symbols, the reference signals are transmitted by using a pair of positive and negative carriers among the 256 carriers other than the central-frequency carrier. The carrier pair used for the transmission of the reference signals is changed from one pair to another pair each time a 2-symbol interval is replaced by a subsequent 2-symbol interval. During every 256 successive symbols, the reference signals are transmitted by using the 256 carriers other than the central-frequency carrier. Each of the 256 carriers intermittently contains the reference signals at a period corresponding to 256 symbols.

The output signals of the IDFT device 4 are stored into a memory within a buffer circuit 7 symbol by symbol. During every period corresponding to a guard interval "gi", the buffer circuit 7 reads out given portions (for example, given later portions) of 1-symbol-corresponding signal segments from the internal memory in response to a clock signal fed from the clock signal generating circuit 3. During every period corresponding to an effective symbol interval "ts", the buffer circuit 7 reads out the wholes of 1-symbol-corresponding signal segments from the internal memory in response to the clock signal fed from the clock signal generating circuit 3. The buffer circuit 7 outputs the readout signals.

Output signals of the buffer circuit 7 are fed to a D/A converter 8, being converted into corresponding analog signals thereby. The D/A converter 8 operates in response to a clock signal fed from the clock signal generating circuit 3. The D/A converter 8 outputs the resultant analog signals to an LPF (a low pass filter) 8A. Only components of the output signals of the D/A converter 8 in a desired frequency band are passed through the LPF 8A.

Output signals of the LPF 8A which correspond to the real part and the imaginary part are fed to a quadrature modulator 9 as baseband signals. A local oscillator 10 outputs a given-frequency signal, for example, a 10.7-MHz signal, to the quadrature modulator 9. The frequency of the output signal of the local oscillator 10 corresponds to a given intermediate frequency (IF). The local oscillator 10 also outputs the given-frequency signal to a 90° phase shifter 11. The device 11 shifts the phase of the given-frequency signal by 90°, and outputs the phase-shift resultant signal to the quadrature modulator 9. In this way, a pair of given-frequency signals having a quadrature relation are fed to the quadrature modulator 9. In the quadrature modulator 9, the quadrature given-frequency signals are modulated in accordance with the baseband signals outputted from the LPF 8A so that the baseband signals are converted into an IF OFDM (intermediate frequency OFDM) signal. The IF OFDM signal has multiple IF orthogonal carriers which are modulated as indications of the output baseband signals of the LPF 8A.

The IF OFDM signal is outputted from the quadrature modulator 9 to a frequency converter 12. The IF OFDM signal is changed by the frequency converter 12 into an RF OFDM (radio frequency OFDM) signal in a desired frequency band for transmission. The central frequency of the RF OFDM signal is equal to, for example, 100 MHz. The RF OFDM signal has multiple RF orthogonal carriers which are modulated as indications of the output baseband signals of the LPF 8A respectively. The frequency converter 12 includes a local oscillator and a mixer. In the frequency converter 12, the IF OFDM signal and the output signal of the local oscillator are mixed by the mixer so that the IF OFDM signal is converted into the RF OFDM signal.

The RF OFDM signal is fed to a transmitting section 13 from the frequency converter 12. The transmitting section 13 includes a linear power amplifier and a transmission antenna. The RF OFDM signal is fed via the linear power amplifier to the transmission antenna, being radiated by the transmission antenna into a transmission line (the air) 14.

The output signal of the local oscillator 10 is also fed to the clock signal generating circuit 3. The clock signal generating circuit 3 produces clock signals in response to the output signal of the local oscillator 10 by frequency dividing processes, and outputs the generated clock signals to the input circuit 2, the IDFT device 4, the buffer circuit 7, and the D/A converter 8 as operation timing control signals, respectively. Also, the clock signal generating circuit 3 produces another clock signal in response to the output signal of the local oscillator 10 by a frequency dividing process, and outputs the generated clock signal to the symbol number counting circuit 5 as a symbol-representing clock signal.

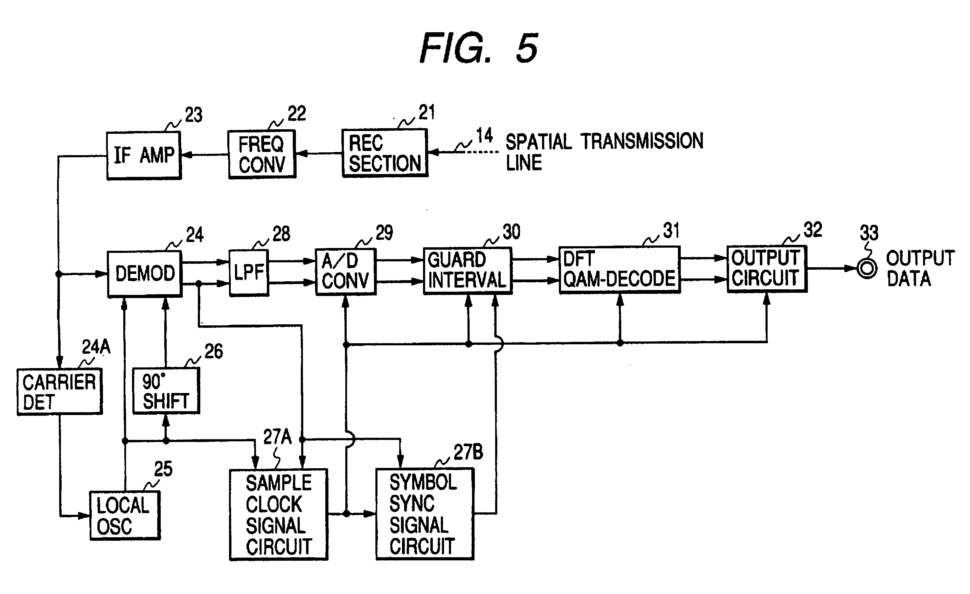

Fig. 5 shows a signal receiving apparatus using orthogonal frequency division multiplexing (OFDM) according to the embodiment of this invention. The signal receiving apparatus of Fig. 5 is able to accept an RF OFDM signal transmitted by the signal transmitting apparatus of Fig. 4.

With reference to Fig. 5, a receiving section 21 includes a reception antenna which catches an RF OFDM signal transmitted from, for example, the signal transmitting apparatus of Fig. 4 via the transmission line (the air) 14. The central frequency of the RF OFDM signal is equal to, for example, 100 MHz. The RF OFDM signal has multiple RF orthogonal carriers which are modulated in accordance with transmitted baseband signals respectively. The receiving section 21 includes an RF amplifier which enlarges the caught RF OFDM signal.

An output RF OFDM signal from the RF amplifier in the receiving section 21 is fed to a frequency converter 22, being converted into a corresponding IF OFDM signal thereby. The central frequency of the IF OFDM signal is equal to, for example, 10.7 MHz. The IF OFDM signal has multiple IF orthogonal carriers which are modulated in accordance with transmitted baseband signals respectively. The frequency converter 22 includes a local oscillator and a mixer. In the frequency converter 22, the RF OFDM signal and the output signal of the local oscillator are mixed by the mixer so that the RF OFDM signal is converted into the IF OFDM signal.

The IF OFDM signal is fed from the frequency converter 22 to an IF amplifier 23, being enlarged to a desired level thereby. The output IF OFDM signal from the IF amplifier 23 is fed to a quadrature demodulator 24 and a carrier detecting circuit 24A.

The carrier detecting circuit 24A includes a PLL (phase locked loop) circuit having a combination of a phase comparator (a multiplier), an LPF, a VCO (voltage-controlled oscillator), and a 1/4 frequency divider. The PLL circuit recovers the carriers in the IF OFDM signal. An output signal of the carrier detecting circuit 24A, which corresponds to the recovered carriers, is fed to a local oscillator 25. The local oscillator 25 is designed to extract the central-frequency carrier among the carriers in the IF OFDM signal with a negligible phase error. The local oscillator 25 outputs a signal corresponding to the extracted central-frequency carrier. Thus, the local oscillator 25 reproduces a local oscillator signal used in a transmitter side.

The IF OFDM signal (or the RF OFDM signal) is composed of the central-frequency carrier and the other carries with frequencies which are spaced at equal intervals. The frequencies of the carriers neighboring the central-frequency carrier are spaced from the frequency of the central carrier by only a small frequency interval. Accordingly, it is preferable that the extraction of the central-frequency carrier is executed by a high-selectivity circuit.

The local oscillator 25 uses a high-selectivity circuit. Specifically, the local oscillator 25 includes a PLL circuit for extracting the central-frequency carrier from the carriers outputted by the carrier detecting circuit 24A. A voltage-controlled oscillator (VCO) in the PLL circuit in the local oscillator 25 uses a voltage-controlled crystal oscillator (VCXO) which can oscillate at a frequency variable in a given small range (for example, $\pm200$ Hz) around the frequency of the central carrier. In addition, an LPF in the PLL circuit has a cut-off frequency adequately low with respect to the frequency intervals between the carriers.

The output signal of the local oscillator 25 is fed to the quadrature demodulator 24. The output signal of the local oscillator 25 is also fed to a 90° phase shifter 26. The device 26 shifts the phase of the output signal of the local oscillator 25 by 90°. The phase-shift resultant signal is outputted from the device 26 to the quadrature demodulator 24. In this way, a pair of reproduced local oscillator signals having a quadrature relation are fed to the quadrature demodulator 24. In response to the quadrature signals, the IF OFDM signal is demodulated by the quadrature demodulator 24 into baseband signals corresponding to a real part and an imaginary part (an in-phase signal and a quadrature signal, that is, an I signal and a Q signal) respectively.

Output signals from the quadrature demodulator 24 are fed to an LPF 28. Only components of the output signals of the quadrature demodulator 24, which occupy a desired frequency band, are passed through the LPF 28. Output signals of the LPF 28 which have analog forms are fed to an A/D converter 29. The output signals of the LPF 28 are subjected to sampling processes and are converted by the A/D converter 29 into corresponding digital signals (digital I and Q signals). The A/D converter 29 operates in response to a sample clock signal fed from a sample clock signal generating circuit 27A.

One of the output signals of the quadrature demodulator 24 is fed to the sample clock signal generating circuit 27A. The output signal of the local oscillator 25 is fed to the sample clock signal generating circuit 27A. The sample clock signal generating circuit 27A includes a PLL circuit phase-locked with respect to a pilot signal in the output signal of the quadrature demodulator 24. It should be noted that the pilot signal is transmitted by specified carriers as a continuous signal during every symbol interval containing a guard interval. The sample clock signal generating circuit 27A derives pilot signal frequency information, and reproduces the pilot signal.

In a transmitter side, the frequency of the pilot signal is set to correspond to a given ratio between integers with respect to the frequency of the sample clock signal. The sample clock signal generating circuit 27A includes a frequency multiplier operating on the reproduced pilot signal at a multiplying factor corresponding to the above-indicated frequency ratio. A sample clock signal (a clock sync signal) is recovered through the frequency multiplication. The sample clock signal generating circuit 27A outputs the sample clock signal to the A/D converter 29 and other circuits 27B, 30, 31, and 32 which will be explained later.

The output signals of the A/D converter 29 are fed to a guard interval processing circuit 30. The guard interval processing circuit 30 extracts time-portions of the output signals (the digital I and Q signals) of the A/D converter 29 which occupy every DFT window corresponding to an effective symbol interval "ts". The guard interval processing circuit 30 operates in response to the sample clock signal fed from the sample clock signal generating circuit 27A and also a symbol sync signal (a symbol clock signal) fed from a symbol sync signal generating circuit 27B. Output signals (digital I and Q signals) of the guard interval processing circuit 30 are fed to a DFT QAM (discrete Fourier transform, quadrature amplitude modulation) decoding circuit 31.

The DFT QAM decoding circuit 31 subjects the output signals of the guard interval processing circuit 30 to processing which corresponds to complex discrete Fourier transform. The DFT QAM decoding circuit 31 operates in response to the sample clock signal fed from the sample clock signal generating circuit 27A. According to the complex discrete Fourier transform processing, the DFT QAM decoding circuit 31 derives the levels of baseband carriers in the real-part signal and the imaginary-part signal outputted from the guard interval processing circuit 30. In the DFT QAM decoding circuit 31, the derived real-part levels and the derived imaginary-part levels are compared with reference demodulation output levels so that the states of transmitted digital signals are determined. In this way, the transmitted digital information is recovered. As will be explained later, the DFT QAM decoding circuit 31 corrects the recovered digital information into correction-resultant recovered digital information.

Output signals of the DFT QAM decoding circuit 31 which correspond to the correction-resultant recovered digital signals are fed to an output circuit 32. The output signals of the DFT QAM decoding circuit 31 are subjected by the output circuit 32 to parallel-to-serial (P/S) conversion, being rearranged and combined into a serial-form digital signal. The output circuit 32 operates in response to the sample clock signal fed from the sample clock signal generating circuit 27A. The serial-form digital signal is transmitted from the output circuit 32 to an external device (not shown) via an output terminal 33.

One of the output signals of the quadrature demodulator 24 is fed to the symbol sync signal generating circuit 27B. The sample clock signal is fed from the sample clock signal generating circuit 27A to the symbol sync signal generating circuit 27B. The symbol sync signal generating circuit 27B detects conditions of the phase of the pilot signal in response to the sample clock signal, thereby reproducing the symbol sync signal. The symbol sync signal generating circuit 27B outputs the symbol sync signal to the guard interval processing circuit 30.

In general, during every symbol interval "ta", signals represented by the information transmitting carriers tend to be discontinuous at a moment of the boundary between the guard interval "gi" and the effective symbol interval "ts". In view of these conditions, the symbol sync signal generating circuit 27B may have the following structure. The symbol sync signal generating circuit 27B includes a high pass filter which processes one of the output signals of the quadrature demodulator 24 to generate a signal representing the moment of the boundary between the guard interval "gi" and the effective symbol interval "ts" for every symbol. The symbol sync signal generating circuit 27B includes a peak detector following the high pass filter, and a comparator comparing the output signal of the peak detector and a predetermined reference voltage. The peak detector and the comparator cooperate to shape the output signal of the high pass filter into a pulse signal (a binary signal). The symbol sync signal generating circuit 27B includes a PLL (phase locked loop) circuit responsive to the pulse signal. The PLL circuit generates a jitter-free symbol timing signal in response to the pulse signal. The symbol sync signal generating circuit 27B includes a frequency divider operating on the sample clock signal fed from the sample clock signal generating circuit 27A. The jitter-free symbol timing signal is fed to the frequency divider as a frequency-division starting signal. Thereby, the frequency divider generates the symbol sync signal.

The DFT QAM decoding circuit 31 extracts a symbol order number signal from the recovered digital information. As previously explained, the symbol order number signal is transmitted by using a specified carrier (for example, the first carrier) among the 256 carriers other than the central-frequency carrier. The DFT QAM decoding circuit 31 extracts reference signals from the recovered digital information in response to the symbol order number signal. As previously explained, the reference signals are transmitted by using a pair of positive and negative carriers which is designated by the 7 higher bits of the symbol order number signal. The DFT QAM decoding circuit 31 determines a corrective equation for the characteristics of the transmission line 14 on the basis of the extracted reference signals. The DFT QAM decoding circuit 31 corrects the recovered digital information according to the determined corrective equation. In addition, during an initial stage immediately after the signal receiving apparatus of Fig. 5 is turned on, the DFT QAM decoding circuit 31 generates an advancing pulse or a retarding pulse for every frame as will be explained later.

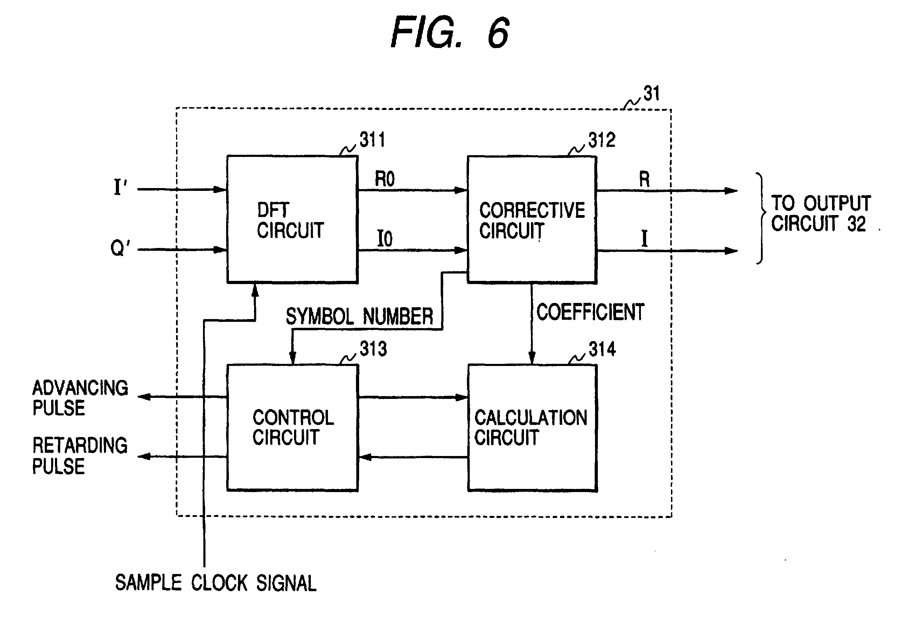

As shown in Fig. 6, the DFT QAM decoding circuit 31 includes a DFT circuit 311, a corrective circuit 312, a control circuit 313, and a calculation circuit 314. The DFT circuit 311 receives the digital in-phase signal I' and the digital quadrature signal Q' from the guard interval processing circuit 30 (see Fig. 5). The DFT circuit 311 subjects the digital in-phase signal I' and the digital quadrature signal Q' to DFT, thereby converting the digital in-phase signal I' and the digital quadrature signal Q' into first recovered real-part and imaginary-part digital signals R0 and I0 which correspond to the transmitted digital information. The DFT circuit 311 outputs the first recovered real-part and imaginary-part digital signals R0 and I0 to the corrective circuit 312. The corrective circuit 312 corrects the first recovered real-part and imaginary-part digital signals R0 and I0 into second recovered real-part and imaginary-part digital signals R and I to cancel signal errors depending on the characteristics of the transmission line 14 (see Fig. 5). The corrective circuit 312 outputs the second recovered real-part and imaginary-part digital signals R and I to the output circuit 32 (see Fig. 5).

The corrective circuit 312 extracts the symbol order number signal from the first recovered digital signals R0 and I0. The corrective circuit 312 extracts the reference signals from the first recovered digital signals R0 and I0 in response to the symbol order number signal. Here, the characters p0s', q0s', r0s', u0s' respectively denote the value of the extracted reference signal corresponding to a positive carrier and the real part, the value of the extracted reference signal corresponding to the positive carrier and the imaginary part, the value of the extracted reference signal corresponding to a negative carrier and the real part, and the value of the extracted reference signal corresponding to the negative carrier and the imaginary part which occur during an even-numbered symbol. In addition, the characters p1s', q1s', r1s', u1s' respectively denote the value of the extracted reference signal corresponding to the positive carrier and the real part, the value of the extracted reference signal corresponding to the positive carrier and the imaginary part, the value of the extracted reference signal corresponding to the negative carrier and the real part, and the value of the extracted reference signal corresponding to the negative carrier and the imaginary part which occur during an odd-numbered symbol.

The characteristics of the transmission line 14 (see Fig. 5) are expressed by a set of coefficients S0, S1, S2, S3, S4, S5, S6, and S7 which relates a pair of transmitter-side positive and negative carriers to a corresponding pair of reception-side positive and negative carries according to the following equation.

$$
\begin{bmatrix} p' \\ q' \\ r' \\ u' \end{bmatrix} = \begin{bmatrix} S0 & -S1 & S2 & S3 \\ S1 & S0 & S3 & -S2 \\ S4 & S5 & S6 & -S7 \\ S5 & -S4 & S7 & S6 \end{bmatrix} \begin{bmatrix} p \\ q \\ r \\ u \end{bmatrix} \qquad \cdots (1)
$$

where "p" denotes a real-part signal value assigned to the transmitter-side positive carrier; "q" denotes an imaginary-part signal value assigned to the transmitter-side positive carrier; "r" denotes a real-part signal value assigned to the transmitter-side negative carrier; "u" denotes an imaginary-part signal value assigned to the transmitter-side negative carrier; "p'" denotes a real-part signal value corresponding to the receiver-side positive carrier; "q'" denotes an imaginary-part signal value corresponding to the receiver-side positive carrier; "r'" denotes a real-part signal value corresponding to the receiver-side negative carrier; and "u'" denotes an imaginary-part signal value corresponding to the receiver-side negative carrier.

The corrective circuit 312 calculates the coefficients S0, S1, S2, S3, S4, S5, S6, and S7 according to the following equations.

$$
S0 = (p0s' \cdot X - p1s' \cdot Y - q0s' \cdot Y + q1s' \cdot X)/2(X^2 - Y^2)
$$

$$
S1 = (p0s' \cdot Y - p1s' \cdot X + q0s' \cdot X - q1s' \cdot Y)/2(X^2 - Y^2)
$$

$$
S2 = (p0s' \cdot X - p1s' \cdot Y + q0s' \cdot Y - q1s' \cdot X)/2(X^2 - Y^2)
$$

$$
S3 = -(p0s' \cdot Y - p1s' \cdot X - q0s' \cdot X + q1s' \cdot Y)/2(X^2 - Y^2)
$$

$$
S4 = (r0s' \cdot X - r1s' \cdot Y + u0s' \cdot Y - u1s' \cdot X)/2(X^2 - Y^2)
$$

$$
S5 = -(r0s' \cdot Y - r1s' \cdot X - u0s' \cdot X + u1s' \cdot Y)/2(X^2 - Y^2)
$$

$$
S6 = (r0s' \cdot X - r1s' \cdot Y - u0s' \cdot Y + u1s' \cdot X)/2(X^2 - Y^2)
$$

$$
S7 = (r0s' \cdot Y - r1s' \cdot X + u0s' \cdot X - u1s' \cdot Y)/2(X^2 - Y^2)
$$

**EP 0 930 751 B1**

where X and Y denote the given values represented by the reference signals generated in the transmitter side, respectively.

The coefficient S0 denotes the rate of the data transfer from the real part of the transmitter-side positive carrier to the real part of the receiver-side positive carrier. Also, the coefficient S0 denotes the rate of the data transfer from the imaginary part of the transmitter-side positive carrier to the imaginary part of the receiver-side positive carrier. The coefficient S1 denotes the rate of the data leakage from the real part of the transmitter-side positive carrier to the imaginary part of the receiver-side positive carrier. Also, the coefficient S1 denotes the rate of the data leakage from the imaginary part of the transmitter-side positive carrier to the real part of the receiver-side positive carrier. The coefficient S2 denotes the rate of the data leakage from the real part of the transmitter-side negative carrier to the real part of the receiver-side positive carrier. Also, the coefficient S2 denotes the rate of the data leakage from the imaginary part of the transmitter-side negative carrier to the imaginary part of the receiver-side positive carrier. The coefficient S3 denotes the rate of the data leakage from the real part of the transmitter-side negative carrier to the imaginary part of the receiver-side positive carrier. Also, the coefficient S3 denotes the rate of the data leakage from the imaginary part of the transmitter-side negative carrier to the real part of the receiver-side positive carrier. The coefficient S4 denotes the rate of the data leakage from the real part of the transmitter-side positive carrier to the real part of the receiver-side negative carrier. Also, the coefficient S4 denotes the rate of the data leakage from the imaginary part of the transmitter-side positive carrier to the imaginary part of the receiver-side negative carrier. The coefficient S5 denotes the rate of the data leakage from the real part of the transmitter-side positive carrier to the imaginary part of the receiver-side negative carrier. Also, the coefficient S5 denotes the rate of the data leakage from the imaginary part of the transmitter-side positive carrier to the real part of the receiver-side negative carrier. The coefficient S6 denotes the rate of the data transfer from the real part of the transmitter-side negative carrier to the real part of the receiver-side negative carrier. Also, the coefficient S6 denotes the rate of the data transfer from the imaginary part of the transmitter-side negative carrier to the imaginary part of the receiver-side negative carrier. The coefficient S7 denotes the rate of the data leakage from the real part of the transmitter-side negative carrier to the imaginary part of the receiver-side negative carrier. Also, the coefficient S7 denotes the rate of the data leakage from the imaginary part of the transmitter-side negative carrier to the real part of the receiver-side negative carrier.

As previously indicated, the coefficients S0, S1, S2, S3, S4, S5, S6, and S7 represent the characteristics of the transmission line 14 (see Fig. 5) along which the I and Q signals are propagated. The calculation of the coefficients S0, S1, S2, S3, S4, S5, S6, and S7 on the basis of the recovered reference signals means detection of the characteristics of the transmission line 14 (see Fig. 5).

The introduction of an inverse matrix changes the equation (1) into the following equation.

$$\begin{bmatrix} p \\ q \\ r \\ u \end{bmatrix} = \frac{1}{\det A} \begin{bmatrix} H0 & H1 & H2 & H3 \\ -H1 & H0 & H3 & -H2 \\ H4 & H5 & H6 & H7 \\ H5 & -H4 & -H7 & H6 \end{bmatrix} \begin{bmatrix} p' \\ q' \\ r' \\ u' \end{bmatrix} \quad \cdots(2)$$

The equation (2) can be used as an equation (a corrective equation) for correcting recovered data into accurate data. In the equation (2), H0, H1, H2, H3, H4, H5, H6, and H7, and "det A" are given as follows.

H0 = +S0(S6S6+S7S7)-S2(S4S6+S5S7)+S3(S4S7-S5S6)

H1 = +S1(S6S6+S7S7)-S3(S4S6+S5S7)-S2(S4S7-S5S6)

H2 = +S4(S2S2+S3S3)-S6(S0S2+S1S3)+S7(S0S3-S1S2)

H3 = +S5(S2S2+S3S3)-S7(S0S2+S1S3)-S6(S0S3-S1S2)

H4 = +S2(S4S4+S5S5)-S0(S4S6+S5S7)-S1(S4S7-S5S6)

$$H5 = +S3(S4S4+S5S5)-S1(S4S6+S5S7)+S0(S4S7-S5S6)$$

$$H6 = +S6(S0S0+S1S1)-S4(S0S2+S1S3)-S5(S0S3-S1S2)$$

$$H7 = +S7(S0S0+S1S1)-S5(S0S2+S1S3)+S4(S0S3-S1S2)$$

$$det\ A = S0{\cdot}H0 + S1{\cdot}H1 + S4{\cdot}H2 + S5{\cdot}H3$$

The corrective circuit 312 calculates the matrix elements H0, H1, H2, H3, H4, H5, H6, and H7, and the value "det A" from the coefficients S0, S1, S2, S3, S4, S5, S6, and S7 according to the above-indicated equations. Thereby, the corrective circuit 312 calculates or determines the following matrix in the corrective equation (2).

$$\frac{1}{det\ A}\begin{bmatrix} H0 & H1 & H2 & H3 \\ -H1 & H0 & H3 & -H2 \\ H4 & H5 & H6 & H7 \\ H5 & -H4 & -H7 & H6 \end{bmatrix} \quad \cdots(3)$$

The corrective circuit 312 stores information representative of the calculated matrix (3) into an internal memory.

In this way, the corrective equation (2) regarding the present pair of positive and negative carriers is prepared. As previously explained, the present pair of positive and negative carriers is decided by the symbol order number. Such corrective equations are provided for the respective 128 pairs of positive and negative carriers. The corrective equations are sequentially calculated, and are periodically updated in response to time-domain variations in the coefficients S0, S1, S2, S3, S4, S5, S6, and S7.

As previously explained, the corrective circuit 312 receives the first recovered real-part and imaginary-part digital signals R' and I' from the DFT circuit 311. Regarding each of the 128 pairs of positive and negative carriers, the corrective circuit 312 retrieves the information of the corresponding matrix (3), and corrects a first recovered real-part digital signal R' and a first recovered imaginary-part digital signal I' into a second recovered real-part digital signal R and a second recovered imaginary-part digital signal I on the basis of the corresponding matrix (3) by using the following corrective equation.

$$\begin{bmatrix} a \\ b \\ c \\ d \end{bmatrix} = \frac{1}{det\ A}\begin{bmatrix} H0 & H1 & H2 & H3 \\ -H1 & H0 & H3 & -H2 \\ H4 & H5 & H6 & H7 \\ H5 & -H4 & -H7 & H6 \end{bmatrix}\begin{bmatrix} a' \\ b' \\ c' \\ d' \end{bmatrix} \quad \cdots(4)$$

The corrective equation (4) agrees with the corrective equation (3). In the corrective equation (4): "a" denotes a correction-resultant real-part signal value corresponding to the positive carrier; "b" denotes a correction-resultant imaginary-part signal value corresponding to the positive carrier; "c" denotes a correction-resultant real-part signal value corresponding to the negative carrier; "d" denotes a correction-resultant imaginary-part signal value corresponding to the negative carrier; "a'" denotes a before-correction real-part signal value corresponding to the positive carrier; "b'" denotes a before-correction imaginary-part signal value corresponding to the positive carrier; "c'" denotes a before-correction real-part signal value corresponding to the negative carrier; and "d'" denotes a before-correction imaginary-part signal value corresponding to the negative carrier.

With reference back to Fig. 5, during an initial stage immediately after the signal receiving apparatus of Fig. 5 is turned on, a process of adjusting the time position of the DFT window into substantial agreement with the effective symbol interval "ts" is implemented as follows. Firstly, the guard interval processing circuit 30 suitably designates the time position of the DFT window relative to the symbol interval "ta" in response to the symbol sync signal fed from the symbol sync signal generating circuit 27B. Then, the time position of the DFT window is adjusted into substantial agreement with the effective symbol interval "ts". The guard interval processing circuit 30 extracts time-portions of the output signals (the digital I and Q signals) of the A/D converter 29 which occupy the DFT window. The guard interval processing circuit 30 outputs the extracted digital I and Q signals to the DFT QAM decoding circuit 31. As previously explained, the output signals of the guard interval processing circuit 30 is subjected to DFT by the DFT circuit 311 (see Fig. 6) in the DFT QAM decoding circuit 31, and the DFT-resultant signals are corrected by the corrective circuit 312 (see Fig. 6) in the DFT QAM decoding circuit 31.

With reference to Fig. 6, the corrective circuit 312 outputs the symbol order number signal to the control circuit 313. During the initial stage, the control circuit 313 decides whether or not one cycle of the symbol order number has been completed, that is, whether or not a 1-frame interval has elapsed, on the basis of the symbol order number signal. In the case where one cycle of the symbol order number has been completed, the coefficients S0, S1, S2, S3, S4, S5, S6, and S7 have been calculated for all the 128 pairs of the positive and negative carriers. When the control circuit 313 decides that one cycle of the symbol order number has been completed, the control circuit 313 outputs a calculation starting command to the calculation circuit 314. Then, the control circuit 313 periodically implements a similar decision and outputs a calculation starting command for every frame.

The calculation circuit 314 fetches information of the calculated coefficients S0, S1, S6, and S7 for the 128 pairs of the positive and negative carriers from the corrective circuit 312 in response to the calculation starting command. The coefficients S0 and S1 clearly and dominantly indicate the characteristics of the transmission line 14 (see Fig. 5) regarding the positive carriers. The coefficients S6 and S7 clearly and dominantly indicate the characteristics of the transmission line 14 (see Fig. 5) regarding the negative carriers.

The coefficients S0 and S1 for the 10-th positive carrier are denoted by $S0_{+10}$ and $S1_{+10}$, respectively. The coefficients S0 and S1 for the 10-th negative carrier are denoted by $S0_{-10}$ and $S1_{-10}$, respectively. The coefficients S0 and S1 for the 20-th positive carrier are denoted by $S0_{+20}$ and $S1_{+20}$, respectively. The coefficients S0 and S1 for the 20-th negative carrier are denoted by $S0_{-20}$ and $S1_{-20}$, respectively. The phase of the 10-th positive carrier is denoted by $\theta_{+10}$. The phase of the 20-th positive carrier is denoted by $\theta_{+20}$.

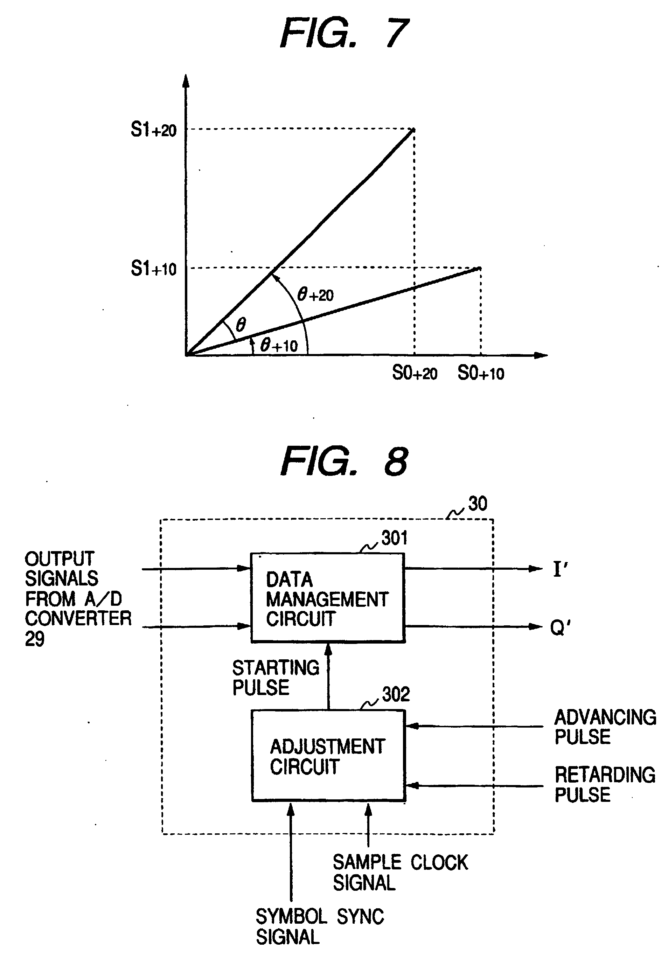

Fig. 7 shows the relation between the phases $\theta_{+10}$ and $\theta_{+20}$ of the 10-th and 20-th positive carriers. The phase difference $\theta$ between the 10-th and 20-th positive carriers is approximately given as follows.

$$\theta = \theta_{+20} - \theta_{+10} \fallingdotseq \tan(\theta_{+20} - \theta_{+10})$$

$$= (\tan\theta_{+20} - \tan\theta_{+10})/(1 + \tan\theta_{+20} \cdot \tan\theta_{+10})$$

$$= \{(S1_{+20}/S0_{+20}) - (S1_{+10}/S0_{+10})\}/\{1 + (S1_{+20}/S0_{+20}) \cdot (S1_{+10}/S0_{+10})\}$$

$$= (S0_{+10} \cdot S1_{+20} - S0_{+20} \cdot S1_{+10})/(S0_{+10} \cdot S0_{+20} + S1_{+10} \cdot S1_{+20})$$

Thus, the calculation circuit 314 calculates the phase difference $I_{+10}$ between the 10-th positive carrier and the 20-th positive carrier according to the following approximate equation.

$$I_{+10} = (S0_{+10} \cdot S1_{+20} - S0_{+20} \cdot S1_{+10})/(S0_{+10} \cdot S0_{+20} + S1_{+10} \cdot S1_{+20})$$

Similarly, the calculation circuit 314 calculates the phase difference $I_{-10}$ between the 10-th negative carrier and the 20-th negative carrier according to the following approximate equation.

$$I_{-10} = (S6_{-10} \cdot S7_{-20} - S6_{-20} \cdot S7_{-10})/(S6_{-10} \cdot S6_{-20} + S7_{-10} \cdot S7_{-20})$$

In addition, the calculation circuit 314 calculates the phase difference $I_{+X}$ between the X-th positive carrier and the (X+10)-th positive carrier according to the following approximate equation.

$$I_{+X} = (S0_{+X} \cdot S1_{+X+10} - S0_{+X+10} \cdot S1_{+X})/(S0_{+X} \cdot S0_{+X+10} + S1_{+X} \cdot S1_{+X+10})$$

Furthermore, the calculation circuit 314 calculates the phase difference $I_{-X}$ between the X-th negative carrier and the (X+10)-th negative carrier according to the following approximate equation.

$$I_{-X} = (S6_{-X} \cdot S7_{-X-10} - S6_{-X-10} \cdot S7_{-X})/(S6_{-X} \cdot S6_{-X-10} + S7_{-X} \cdot S7_{-X-10})$$

Here, X denotes multiples of 10, and specifically X = 20, 30, 40, 50, ⋯, 100, 110.

In this way, the calculation circuit 314 calculates the phase differences among the carriers spaced by 10-carrier intervals. Alternatively, the calculation circuit 314 may calculate the phase differences among the carriers spaced by 5-carrier intervals or 20-carrier intervals. The calculation circuit 314 may calculate the phase differences among only the positive carriers. The calculation circuit 314 may calculate the phase differences among the carriers except carriers near the edge carriers.

The calculation circuit 314 calculates the accumulation value I from the calculated phase differences according to the following equation.

$$I = |I_{+10} + I_{+20} + I_{+30} + \cdots + I_{+100} + I_{+110}|$$

$$+ |I_{-10} + I_{-20} + I_{-30} + \cdots + I_{-100} + I_{-110}|$$

The calculation circuit 314 outputs information representative of the calculated accumulation value I to the control circuit 313.

The control circuit 313 stores the information of the present accumulation value I into an internal memory. The control circuit 313 compares the present accumulation value I and the immediately-preceding accumulation value I(old). When the present accumulation value I is equal to or smaller than the immediately-preceding accumulation value I(old), the control circuit 313 outputs an advancing pulse to the guard interval processing circuit 30. When the present accumulation value I is greater than the immediately-preceding accumulation value I(old), the control circuit 313 outputs a retarding pulse to the guard interval processing circuit 30. Generally, the DFT window determined by the guard interval processing circuit 30 coincides with the effective symbol interval "ts" when the accumulation value I is minimized.

As shown in Fig. 8, the guard interval processing circuit 30 includes a data management circuit 301 and an adjustment circuit 302. The data management circuit 301 receives the output signals (the digital I and Q signals) of the A/D converter 29 (see Fig. 5). During every DFT window, the data management circuit 301 transmits the output signals of the A/D converter 29 to the DFT QAM decoding circuit 31 (see Fig. 5) as the digital in-phase signal I' and the digital quadrature signal Q'. During other periods, the data management circuit 301 blocks the transmission of the output signals of the A/D converter 29 to the DFT QAM decoding circuit 31. For every symbol, the data management circuit 301 starts the signal transmission in response to a starting pulse fed from the adjustment circuit 302. For every symbol, the data management circuit 301 implements the transmission of a sequence of 512 digital signal time segments (512 samples).

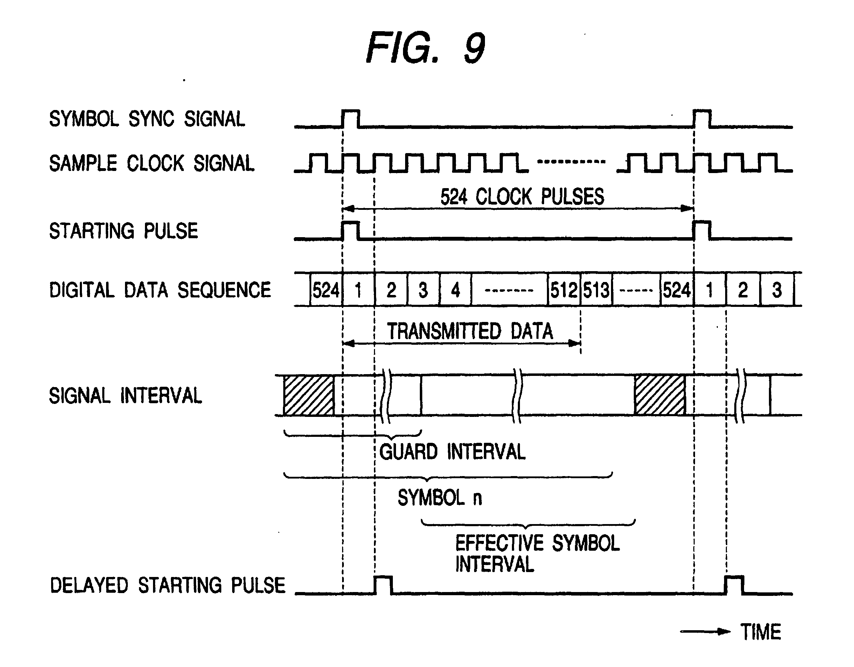

The adjustment circuit 302 includes a counter which counts pulses of the sample clock signal fed from the sample clock signal generating circuit 27A (see Fig. 5). An example of the waveform of the sample clock signal is shown in Fig. 9. The count number provided by the counter in the adjustment circuit 302 is reset or cleared by every pulse of the symbol sync signal fed from the symbol sync signal generating circuit 27B (see Fig. 5). An example of the waveform of the symbol sync signal is shown in Fig. 9. The count number is incremented one by one in response to every pulse of the sample clock signal. Each time the count number reaches "524", the adjustment circuit 302 outputs a starting pulse to the data management circuit 301. An example of the waveform of the starting pulse is shown in Fig. 9.

Every symbol corresponds to 524 digital signal time segments (524 samples) composed of 512 effective digital signal time segments (512 effective samples) and 12 digital signal time segments (12 samples) for a guard interval. For every symbol, a sequence of 512 digital signal time segments (512 samples) which starts from the moment of the occurrence of a starting pulse is transmitted from the A/D converter 29 to the DFT QAM decoding circuit 31 through the data management circuit 301 as data time segments available in a DFT window. On the other hand, 12 remaining digital signal time segments are inhibited by the data management circuit 301 from traveling to the DFT QAM decoding circuit 31. In Fig. 9, digital signal time segments numbered as "1", "2", ⋯, and "512" are transmitted while digital signal time segments numbered as "513", "514", ⋯, and "524" are blocked.

The adjustment circuit 302 receives the advancing pulse or the retarding pulse from the DFT QAM decoding circuit 31 for every frame until the DFT window is adjusted into substantial agreement with the effective symbol interval "ts". Initially, the adjustment circuit 302 periodically receives the advancing pulse from the DFT QAM decoding circuit 31. During every symbol interval in a frame in which the advancing pulse is fed from the DFT QAM decoding circuit 31, the adjustment circuit 302 cuts off one pulse among 524 successive pulses of the sample clock signal. Specifically, the adjustment circuit 302 inhibits the travel of one pulse among 524 successive pulses to its internal counter. Therefore, as shown in Fig. 9, the adjustment circuit 302 outputs a delayed starting pulse which is retarded by a time interval corresponding to one pulse of the sample clock signal. The data management circuit 301 responds to the delayed starting pulse, thereby permitting the transmission of digital signal time segments numbered as "2", "3", ⋯, and "513" and inhibiting the transmission of digital signal time segments numbered as "514", "515", ⋯, "524", and "1".

As long as the advancing pulse remains periodically fed from the DFT QAM decoding circuit 31, the adjustment circuit 302 delays the starting pulse by a 1-sample period each time a frame interval changes from one to another. In other words, as long as the advancing pulse remains periodically fed from the DFT QAM decoding circuit 31, the delay of the starting pulse continues to be incremented stepwise. Therefore, the advancing pulse delays the DFT window relative to the symbol interval "ta".

Normally, the accumulation value I provided by the calculation circuit 314 in the DFT QAM decoding circuit 31 is minimized when the time position of the starting pulse comes into agreement with the time position of the end of the guard interval "gi". The accumulation value I increases as the time position of the starting pulse enters the effective symbol interval "ts" and retards from the time position of the end of the guard interval "gi". Also, the accumulation value I increases as the time position of the starting pulse advances from the time position of the end of the guard interval "gi" toward the time position of the head thereof.

Initially, the time position of the starting pulse precedes the time position of the end of the corresponding guard interval "gi", and the DFT QAM decoding circuit 31 periodically outputs the advancing pulse to the adjustment circuit 302. Therefore, the adjustment circuit 302 delays the starting pulse so that the DFT window also delays relative to the symbol interval "ta". When the starting pulse enters the effective symbol interval "ts" as a result of the delay of the DFT window, the DFT QAM decoding circuit 31 outputs the retarding pulse to the adjustment circuit 302 instead of the advancing pulse. It is thought that the starting pulse which occurs immediately before its entrance into the effective symbol interval "ts" is correct in timing with respect to the effective symbol interval "ts". To recover such a correct starting pulse, the retarding pulse is generated instead of the advancing pulse.

When the retarding pulse is fed from the DFT QAM decoding circuit 31, the adjustment circuit 302 adds one pulse to 524 successive pulses of the sample clock signal. Therefore, the adjustment circuit 302 outputs an advanced starting pulse which is advanced by a time interval corresponding to one pulse of the sample clock signal. The data management circuit 301 responds to the advanced starting pulse, thereby permitting the transmission of digital signal time segments advanced by one sample. As a result, the DFT window is advanced back into substantial agreement with the effective symbol interval "ts". During a later stage, the DFT window is held in substantial agreement with the effective symbol interval "ts".

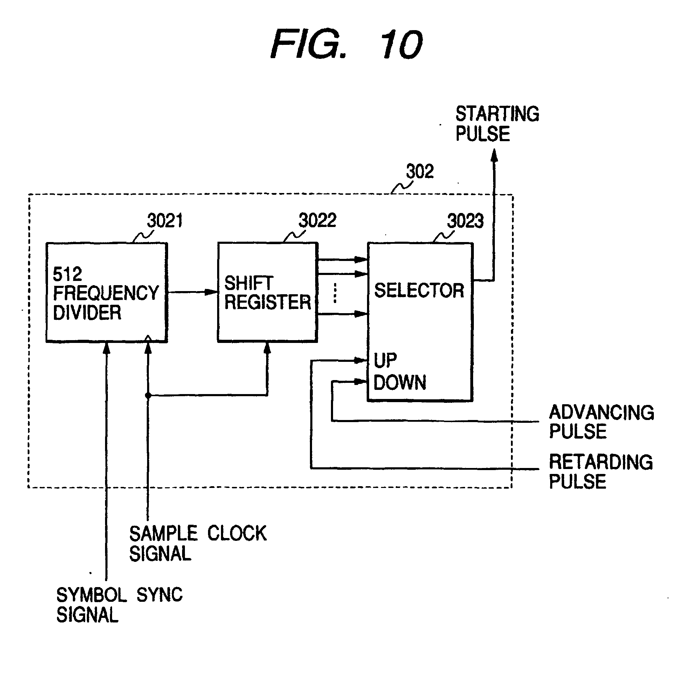

As shown in Fig. 10, the adjustment circuit 302 includes a frequency divider 3021, a shift register 3022, and a selector 3023. The frequency divider 3021 has a division factor of 512. The frequency divider 3021 is cleared or reset by every pulse of the symbol sync signal fed from the symbol sync signal generating circuit 27B (see Fig. 5). The frequency divider 3021 operates on the sample clock signal fed from the sample clock signal generating circuit 27A (see Fig. 5). The frequency divider 3021 outputs one pulse to the shift register 3022 for 512 successive pulses of the sample clock signal. For example, the shift register 3022 has 8 bits, that is, a series of 8 storage locations. The output signal of the frequency divider 3021 is periodically written into a given storage location (for example, a first storage location) in the shift register 3022 in response to the sample clock signal fed from the sample clock signal generating circuit 27A (see Fig. 5). In the shift register 3022, 1-bit signals are moved from the storage locations to the adjacent storage locations in response to every pulse in the sample clock signal. Thus, the shift register 3022 periodically implements a signal shifting process in response to the sample clock signal. The shift register 3022 outputs an 8-bit parallel-form signal from the 8 storage locations to the selector 3023 which periodically varies in accordance with the signal shifting process.

The selector 3023 has an "up" terminal and a "down" terminal to which the advancing pulse and the retarding pulse can be applied from the DFT QAM decoding circuit 31 respectively. The selector 3023 selects one from among the 8 bits of the output signal of the shift register 3022 as a starting pulse. When the "up" terminal of the selector 3023 receives the advancing pulse, the selector 3023 selects one from among the 8 bits whose phase delays from the phase of the previously-selected bit by one sample. When the "down" terminal of the selector 3023 receives the retarding pulse, the selector 3023 selects one from among the 8 bits whose phase advances from the phase of the previously-selected bit by one sample. As previously explained, the selector 3023 outputs the selected bit to the data management circuit 301 as a starting pulse for every symbol.

Alternatively, the guard interval processing circuit 30 may include a memory having a capacity corresponding to a given number of symbols. In this case, the output signal of the A/D converter 29 are stored into the memory within the guard interval processing circuit 30. Designated portions of the signals which correspond to the DFT window are read out from the memory within the guard interval processing circuit 30 in response to the symbol sync signal and the sample clock signal fed from the symbol sync signal generating circuit 27B and the sample clock signal generating circuit 27A. The readout signal portions are fed to the DFT QAM decoding circuit 31.

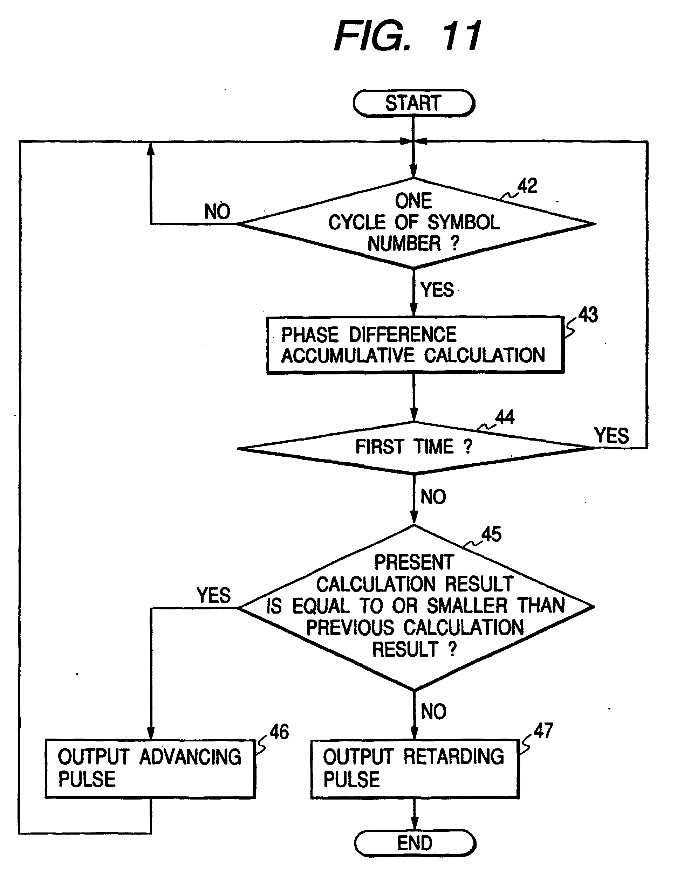

The control circuit 313 and the calculation circuit 314 in the DFT QAM decoding circuit 31 include a common CPU which operates in accordance with a program stored in its internal ROM. Fig. 11 is a flowchart of the program. The program is started when the signal receiving apparatus of Fig. 5 is turned on. The program remains executed during an initial stage immediately after the signal receiving apparatus of Fig. 5 is turned on. Specifically, the program remains executed until a retarding pulse is outputted instead of an advancing pulse, that is, until the DFT window is made into substantial agreement with the effective symbol interval "ts".

As shown in Fig. 11, a first step 42 of the program decides whether or not one new cycle of the symbol order number has been completed, that is, whether or not a new 1-frame interval has elapsed, by referring to the symbol order number signal. When it is decided that one new cycle of the symbol order number has been completed, the program advances from the step 42 to a step 43. Otherwise, the program repeats the step 42.

The step 43 fetches information of the calculated coefficients S0, S1, S6, and S7 for the 128 pairs of the positive and negative carriers from the corrective circuit 312. The step 43 calculates the phase differences from the coefficients S0, S1, S6, and S7, and then calculates the accumulation value I from the calculated phase differences.

A step 44 following the step 43 decides whether or not the execution of the step 43, that is, the calculation of the accumulation value I, is the first time. When the calculation of the accumulation value I is the first time, the program returns to the step 42. When the calculation of the accumulation value I is the second time or a later time, the program advances from the step 44 to a step 45.

The step 45 compares the present accumulation value I and the immediately-preceding accumulation value I(old). When the present accumulation value I is equal to or smaller than the immediately-preceding accumulation value I(old), the program advances from the step 45 to a step 46. When the present accumulation value I is greater than the immediately-preceding accumulation value I(old), the program advances from the step 45 to a step 47.

The step 46 outputs an advancing pulse to the guard interval processing circuit 30. After the step 46, the program returns to the step 42.

On the other hand, the step 47 outputs a retarding pulse to the guard interval processing circuit 30. After the step 47, the current execution cycle of the program ends.

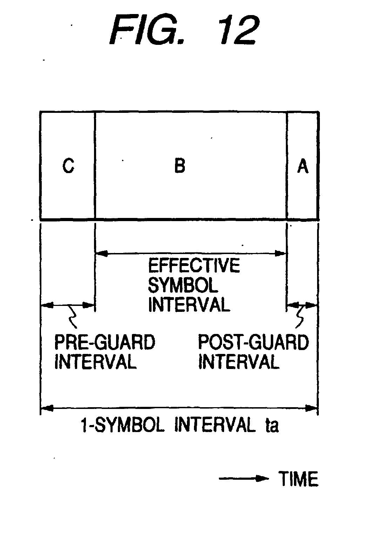

As shown in Fig. 12, each OFDM transmission symbol interval "ta" may be composed of a pre-guard-interval "C", an effective symbol interval "B", and a post-guard-interval "A". The pre-guard-interval "C" precedes the effective symbol interval "B". The post-guard-interval "A" follows the effective symbol interval "B". The effective symbol interval "B" contains 512 digital data pieces (512 samples). The pre-guard-interval "C" contains 10 digital data pieces (10 samples) which are copies of 10 later digital data pieces among the 512 digital dat pieces assigned to the effective symbol interval "B". The post-guard interval "A" contains 2 digital data pieces (2 samples) which are copies of 2 former digital data pieces among the 512 digital data pieces assigned to the effective symbol interval "B".

## Claims

1. A method of receiving an orthogonal frequency division multiplexed (OFDM) signal containing information and a reference signal, the method comprising the steps of:

    receiving an OFDM signal via a transmission line (14);
    generating a symbol sync signal in response to the received OFDM signal;
    setting a time window for every symbol in response to the generated symbol sync signal;
    extracting a time segment of the received OFDM signal which extends in the time window;
    subjecting the extracted time segment of the received OFDM signal to discrete Fourier transform to recover transmitted information and a reference signal;
    periodically calculating coefficients representative of characteristics of the transmission line from the recovered reference signal;

    the method being **characterized by**
    periodically calculating approximate phase differences between carriers in respective pairs among carriers of the received OFDM signal on the basis of the calculated coefficients;
    periodically calculating an accumulation value of the calculated approximate phase differences;
    comparing the currently-calculated accumulation value and the previously-calculated accumulation value; and
    controlling the phase of the time window relative to a symbol in response to a result of the comparison between the currently-calculated accumulation value and the previously-calculated accumulation value.

2. A method of receiving an orthogonal frequency division multiplexed (OFDM) signal containing information, a symbol order number signal, and a reference signal, the symbol order number signal representing a relation between the OFDM signal and the reference signal, the method comprising the steps of:

    receiving an OFDM signal via a transmission line (14);
    generating a symbol sync signal in response to the received OFDM signal;
    setting a time window for every symbol in response to the generated symbol sync signal;

extracting a time segment of the received OFDM signal which extends in the time window;

subjecting the extracted time segment of the received OFDM signal to discrete Fourier transform to recover transmitted information and a symbol order number signal;

recovering a reference signal from a result of the discrete Fourier transform in response to the symbol order number signal;

periodically calculating coefficients representative of characteristics of the transmission line from the recovered reference signal, the calculated coefficients including coefficients which indicate a rate of information transfer from a real part of a transmitter-side carrier to a real part of a receiver-side carrier, a rate of information transfer from an imaginary part of the transmitter-side carrier to an imaginary part of the receiver-side carrier, a rate of information leakage from the real part of the transmitter-side carrier to the imaginary part of the receiver-side carrier, and a rate of information leakage from the imaginary part of the transmitter-side carrier to the real part of the receiver-side carrier;

the method being **characterized by**

periodically calculating approximate phase differences between carriers in respective pairs among carriers of the received OFDM signal on the basis of the calculated coefficients;

periodically calculating an accumulation value of the calculated approximate phase differences;

comparing the currently-calculated accumulation value and the previously-calculated accumulation value; and

controlling the phase of the time window relative to a symbol in response to a result of the comparison between the currently-calculated accumulation value and the previously-calculated accumulation value.

3. An apparatus for receiving an orthogonal frequency division multiplexed (OFDM) signal containing information and a reference signal, the apparatus comprising:

means (21) for receiving an OFDM signal via a transmission line (14);

means (27B) for generating a symbol sync signal in response to the received OFDM signal;

means (30) for setting a time window for every symbol in response to the generated symbol sync signal;

means (301) for extracting a time segment of the received OFDM signal which extends in the time window;

means (311) for subjecting the extracted time segment of the received OFDM signal to discrete Fourier transform to recover transmitted information and a reference signal; the apparatus being

**characterized by** :

means (312) for periodically calculating coefficients representative of characteristics of the transmission line from the recovered reference signal;

means (314) for periodically calculating approximate phase differences between carriers in respective pairs among carriers of the received OFDM signal on the basis of the calculated coefficients;

means (314) for periodically calculating an accumulation value of the calculated approximate phase differences;

means (314) for comparing the currently-calculated accumulation value and the previously-calculated accumulation value; and

means (313,302) for controlling the phase of the time window relative to a symbol in response to a result of the comparison between the currently-calculated accumulation value and the previously-calculated accumulation value.

4. An apparatus for receiving an orthogonal frequency division multiplexed (OFDM) signal containing information, a symbol order number signal, and a reference signal, the symbol order number signal representing a relation between the OFDM signal and the reference signal, the apparatus comprising:

means (21) for receiving an OFDM signal via a transmission line (14);

means for generating a symbol sync signal in response to the received OFDM signal;

means (30) for setting a time window for every symbol in response to the generated symbol sync signal;

means (301) for extracting a time segment of the received OFDM signal which extends in the time window;

means (311) for subjecting the extracted time segment of the received OFDM signal to discrete Fourier transform to recover transmitted information and a symbol order number signal;

means (312) for recovering a reference signal from a result of the discrete Fourier transform in response to the symbol order number signal;

means (312) for periodically calculating coefficients representative of characteristics of the transmission line from the recovered reference signal, the calculated coefficients including coefficients which indicate a rate of information transfer from a real part of a transmitter-side carrier to a real part of a receiver-side carrier, a rate of information transfer from an imaginary part of the transmitter-side carrier to an imaginary part of the receiver-side carrier, a rate of information leakage from the real part of the transmitter-side carrier to the imaginary part of the receiver-side carrier, and a rate of information leakage from the imaginary part of the transmitter-side carrier to the real part of the receiver-side carrier;

the apparatus being **characterized by** :

means (314) for periodically calculating approximate phase differences between carriers in respective pairs among carriers of the received OFDM signal on the basis of the calculated coefficients;
means (314) for periodically calculating an accumulation value of the calculated approximate phase differences;
means (314) for comparing the currently-calculated accumulation value and the previously-calculated accumulation value; and
means (313, 302) for controlling the phase of the time window relative to a symbol in response to a result of the comparison between the currently-calculated accumulation value and the previously-calculated accumulation value.

**Patentansprüche**

1. Verfahren zum Empfangen eines orthogonal frequenzmultiplexten Signals (OFDM-Signals), das Information und ein Referenzsignal umfasst, wobei das Verfahren die Schritte umfasst, dass:

ein OFDM-Signal über eine Übertragungsleitung (14) empfangen wird;
ein Symbol-Sync-Signal in Ansprechen auf das empfangene OFDM-Signal erzeugt wird;
ein Zeitfenster für jedes Symbol in Ansprechen auf das erzeugte Symbol-Sync-Signal gesetzt wird;
ein Zeitsegment des empfangenen OFDM-Signals extrahiert wird, das sich in dem Zeitfenster erstreckt;
das extrahierte Zeitsegment des empfangenen OFDM-Signals einer diskreten Fouriertransformation unterzogen wird, um übertragene Information und ein Referenzsignal rückzugewinnen;
Koeffizienten, die für die Charakteristiken der Übertragungsleitung repräsentativ sind, aus dem rückgewonnenen Referenzsignal periodisch berechnet werden;

wobei das Verfahren **dadurch gekennzeichnet ist, dass**:

ungefähre Phasendifferenzen zwischen Trägern in jeweiligen Paaren unter Trägern des empfangenen OFDM-Signals auf der Basis der berechneten Koeffizienten periodisch berechnet werden;
ein Akkumulationswert der berechneten ungefähren Phasendifferenzen periodisch berechnet wird;
der gegenwärtig berechnete Akkumulationswert und der vorher berechnete Akkumulationswert verglichen werden; und
die Phase des Zeitfensters relativ zu einem Symbol in Ansprechen auf ein Ergebnis des Vergleichs zwischen dem gegenwärtig berechneten Akkumulationswert und dem vorher berechneten Akkumulationswert gesteuert wird.

2. Verfahren zum Empfang eines orthogonal frequenzmultiplexten Signals (OFDM-Signals), das Information, ein Symbolordnungszahlsignal und ein Referenzsignal umfasst, wobei das Symbolordnungszahlsignal eine Beziehung zwischen dem OFDM-Signal und dem Referenzsignal darstellt, wobei das Verfahren die Schritte umfasst, dass:

ein OFDM-Signal über eine Übertragungsleitung (14) empfangen wird;
ein Symbol-Sync-Signal in Ansprechen auf das empfangene OFDM-Signal erzeugt wird;
ein Zeitfenster für jedes Symbol in Ansprechen auf das erzeugte Symbol-Sync-Signal gesetzt wird;
ein Zeitsegment des empfangenen OFDM-Signales extrahiert wird, das sich in dem Zeitfenster erstreckt;
das extrahierte Zeitsegment des empfangenen OFDM-Signals einer diskreten Fouriertransformation unterzogen wird, um übertragehe Information und ein Symbolordnungszahlsignal rückzugewinnen;

ein Referenzsignal aus einem Ergebnis der diskreten Fouriertransformation in Ansprechen auf das Symbolordnungszahlsignal rückgewonnen wird;

Koeffizienten, die für Charakteristiken der Übertragungsleitung repräsentativ sind, aus dem rückgewonnenen Referenzsignal periodisch berechnet werden, wobei die berechneten Koeffizienten Koeffizienten umfassen, die eine Rate einer Informationsübertragung von einem Realteil eines senderseitigen Trägers zu einem Realteil eines empfängerseitigen Trägers, eine Rate einer Informationsübertragung von einem Imaginärteil des senderseitigen Trägers zu einem Imaginärteil des empfängerseitigen Trägers, eine Rate eines Informationslecks von dem Realteil des senderseitigen Trägers zu dem Imaginärteil des empfängerseitigen Trägers und eine Rate eines Informationslecks von dem Imaginärteil des senderseitigen Trägers zu dem Realteil des empfängerseitigen Trägers angeben;

wobei das Verfahren ferner **dadurch gekennzeichnet ist, dass**:

ungefähre Phasendifferenzen zwischen Trägern in jeweiligen Paaren unter Trägern des empfangenen OFDM-Signals auf der Basis der berechneten Koeffizienten periodisch berechnet werden;

ein Akkumulationswert der berechneten ungefähren Phasendifferenzen periodisch berechnet wird;

der gegenwärtig berechnete Akkumulationswert und der vorher berechnete Akkumulationswert verglichen werden; und

die Phase des Zeitfensters relativ zu einem Symbol in Ansprechen auf ein Ergebnis des Vergleichs zwischen dem gegenwärtig berechneten Akkumulationswert und dem vorher berechneten Akkumulationswert gesteuert wird.

3. Vorrichtung zum Empfang eines orthogonal frequenzmultiplexten Signals (OFDM-Signals), das Information und ein Referenzsignal umfasst, wobei die Vorrichtung umfasst:

ein Mittel (21) zum Empfang eines OFDM-Signals über eine Übertragungsleitung (14);

ein Mittel (27B) zur Erzeugung eines Symbol-Sync-Signals in Ansprechen auf das empfangene OFDM-Signal;

ein Mittel (30) zum Setzen eines Zeitfensters für jedes Symbol in Ansprechen auf das erzeugte Symbol-Sync-Signal;

ein Mittel (301) zur Extraktion eines Zeitsegmentes des empfangenen OFDM-Signals, das sich in dem Zeitfenster erstreckt;

ein Mittel (311), um das extrahierte Zeitsegment des empfangenen OFDM-Signals einer diskreten Fouriertransformation zu unterziehen und damit gesendete Information und ein Referenzsignal rückzugewinnen;

wobei die Vorrichtung **gekennzeichnet ist durch**:

ein Mittel (312) zur periodischen Berechnung von Koeffizienten, die für Charakteristiken der Übertragungsleitung repräsentativ sind, aus dem rückgewonnenen Referenzsignal;

ein Mittel (314) zur periodischen Berechnung ungefährer Phasendifferenzen zwischen Trägern in jeweiligen Paaren unter Trägern des empfangenen OFDM-Signals auf der Basis der berechneten Koeffizienten; ein Mittel (314) zur periodischen Berechnung eines Akkumulationswertes der berechneten ungefähren Phasendifferenzen;

ein Mittel (314) zum Vergleich des gegenwärtig berechneten Akkumulationswertes und des vorher berechneten Akkumulationswertes; und

ein Mittel (313, 302) zur Steuerung der Phase des Zeitfensters relativ zu einem Symbol in Ansprechen auf ein Ergebnis des Vergleichs zwischen dem gegenwärtig berechneten Akkumulationswert und dem vorher berechneten Akkumulationswert.

4. Vorrichtung zum Empfang eines orthogonal frequenzmultiplexten Signals (OFDM-Signals), das Information, ein Symbolordnungszahlsignal und ein Referenzsignal umfasst, wobei das Symbolordnungszahlsignal eine Beziehung zwischen dem OFDM-Signal und dem Referenzsignal darstellt, wobei die Vorrichtung umfasst:

ein Mittel (21) zum Empfang eines OFDM-Signals über eine Übertragungsleitung (14);

ein Mittel zur Erzeugung eines Symbol-Sync-Signals in Ansprechen auf das empfangene OFDM-Signal;

ein Mittel (30) zum Setzen eines Zeitfensters für jedes Symbol in Ansprechen auf das erzeugte Symbol-Sync-Signal;

ein Mittel (301) zur Extraktion eines Zeitsegmentes des empfangenen OFDM-Signals, das sich in dem Zeitfenster erstreckt;

ein Mittel (311), um das extrahierte Zeitsegment des empfangenen OFDM-Signals einer diskreten Fouriertransformation zu unterziehen und damit übertragene Information und ein Symbolordnungszahlsignal rückzugewinnen;

ein Mittel (312) zur Rückgewinnung eines Referenzsignals aus einem Ergebnis der diskreten Fouriertransformation in Ansprechen auf das Symbolordnungszahlsignal;

ein Mittel (312) zur periodischen Berechnung von Koeffizienten, die für Charakteristiken der Übertragungsleitung repräsentativ sind, aus dem rückgewonnenen Referenzsignal, wobei die berechneten Koeffizienten Koeffizienten umfassen, die eine Rate einer Informationsübertragung von einem Realteil eines senderseitigen Trägers zu einem Realteil eines empfängerseitigen Trägers, eine Rate einer Informationsübertragung von einem Imaginärteil des senderseitigen Trägers zu einem Imaginärteil des empfängerseitigen Trägers, eine Rate eines Informationslecks von dem Realteil des senderseitigen Trägers zu dem Imaginärteil des empfängerseitigen Trägers und eine Rate eines Informationslecks von dem Imaginärteil des senderseitigen Trägers zu dem Realteil des empfängerseitigen Trägers angeben;

wobei die Vorrichtung **gekennzeichnet ist durch**

ein Mittel (314) zur periodischen Berechnung ungefährer Phasendifferenzen zwischen Trägern in jeweiligen Paaren unter Trägern des empfangenen OFDM-Signals auf der Basis berechneter Koeffizienten;

ein Mittel (314) zur periodischen Berechnung eines Akkumulationswertes der berechneten ungefähren Phasendifferenzen;

ein Mittel (314) zum Vergleich des gegenwärtig berechneten Akkumulationswertes und des vorher berechneten Akkumulationswertes; und

ein Mittel (313, 302) zur Steuerung der Phase des Zeitfensters relativ zu einem Symbol in Ansprechen auf ein Ergebnis des Vergleichs zwischen dem gegenwärtig berechneten Akkumulationswert und dem vorher berechneten Akkumulationswert.

## Revendications

1.  Procédé de réception d'un signal multiplexé par répartition de fréquence orthogonale (OFDM) contenant des informations et un signal de référence, le procédé comprenant les étapes consistant à :

    recevoir un signal OFDM via une ligne de transmission (14) ;
    générer un signal de synchronisation de symbole en réponse au signal OFDM reçu ;
    établir une fenêtre temporelle pour chaque symbole en réponse au signal de synchronisation de symbole généré ;
    extraire un segment temporel du signal OFDM reçu qui s'étend dans la fenêtre temporelle ;
    soumettre le segment temporel extrait du signal OFDM reçu à une transformée de Fourier discrète pour reconstituer les informations transmises et un signal de référence ;
    calculer périodiquement des coefficients représentatifs des caractéristiques de la ligne de transmission à partir du signal de référence reconstitué ; le procédé étant, de plus, **caractérisé par** les étapes consistant à calculer périodiquement des différences de phase approchée entre les porteuses dans des paires respectives parmi les porteuses du signal OFDM reçu sur la base des coefficients calculés ;
    calculer périodiquement une valeur d'accumulation des différences de phase approchées calculées ;
    comparer la valeur d'accumulation actuellement calculée et la valeur d'accumulation précédemment calculée ; et
    commander la phase de la fenêtre temporelle par rapport à un symbole en réponse aux résultats de la comparaison entre la valeur d'accumulation actuellement calculée et la valeur d'accumulation précédemment calculée.

2.  Procédé de réception d'un signal multiplexé par répartition de fréquence orthogonale (OFDM) contenant des informations, un signal de numéro d'ordre de symbole et un signal de référence, le signal de numéro d'ordre de symbole représentant une relation entre le signal OFDM et le signal de référence, le procédé comprenant les étapes consistant à :

    recevoir un signal OFDM via une ligne de transmission (14) ;
    générer un signal de synchronisation de symbole en réponse au signal OFDM reçu ;
    établir une fenêtre temporelle pour chaque symbole en réponse au signal de synchronisation du symbole généré ;

extraire un segment temporel du signal OFDM reçu qui s'étend dans la fenêtre temporelle ;

soumettre le segment temporel extrait du signal OFDM reçu à une transformée de Fourier discrète pour reconstituer les informations transmises et un signal de numéro d'ordre de symbole ;

reconstituer un signal de référence à partir d'un résultat de la transformée de Fourier discrète en réponse au signal de numéro d'ordre de symbole ;

calculer périodiquement des coefficients représentatifs des caractéristiques de la ligne de transmission à partir du signal de référence reconstitué, les coefficients calculés incluant des coefficients qui indiquent une vitesse de transfert des informations à partir d'une partie réelle d'une porteuses côté émetteur à une partie réelle d'une porteuse côté récepteur, une vitesse de transfert d'informations à partir d'une partie imaginaire de la porteuse côté émetteur à une partie imaginaire de la porteuse côté récepteur, un taux de perte d'informations à partir de la partie réelle de la porteuse côté émetteur à la partie imaginaire de la porteuse côté récepteur, et un taux de perte d'informations à partir de la partie imaginaire de la porteuse côté émetteur à la partie réelle de la porteuse côté récepteur ;

le procédé étant **caractérisé par** les étapes supplémentaires consistant à :

calculer périodiquement des différences de phase approchées entre les porteuses dans des paires respectives parmi les porteuses du signal OFDM reçu sur la base des coefficients calculés ;

calculer périodiquement une valeur d'accumulation des différences de phase approchées calculées ;

comparer la valeur d'accumulation actuellement calculée et la valeur d'accumulation précédemment calculée ; et

commander la phase de la fenêtre temporelle par rapport à un symbole en réponse à un résultat de la comparaison entre la valeur d'accumulation actuellement calculée et la valeur d'accumulation précédemment calculée.

3.  Appareil pour recevoir un signal multiplexé par répartition de fréquence orthogonale (OFDM) contenant des informations et un signal de référence, l'appareil comprenant :

un moyen (21) pour recevoir un signal OFDM via une ligne de transmission (14) ;

un moyen (27B) pour générer un signal de synchronisation de symbole en réponse au signal OFDM reçu ;

un moyen (30) pour établir une fenêtre temporelle pour chaque symbole en réponse au signal de synchronisation de symbole généré ;

un moyen (301) pour extraire un segment temporel du signal OFDM reçu qui s'étend dans la fenêtre temporel ;

un moyen (311) pour soumettre le segment temporel extrait du signal OFDM reçu à une transformée de Fourier discrète pour reconstituer les informations transmises et un signal de référence ; l'appareil étant **caractérisé par**

un moyen (312) pour calculer périodiquement des coefficients représentatifs des caractéristiques de la ligne de transmission à partir du signal de référence reconstitué ;

un moyen (314) pour calculer périodiquement des différences de phase approchées entre les porteuses dans des paires respectives parmi les porteuses du signal OFDM reçu sur la base des coefficients calculés ;

un moyen (314) pour calculer périodiquement une valeur d'accumulation des différences de phase approchées calculées ;

un moyen (314) pour comparer la valeur d'accumulation actuellement calculée et la valeur d'accumulation précédemment calculée ; et

un moyen (313, 302) pour commander la phase de la fenêtre temporelle par rapport à un symbole en réponse à un résultat de la comparaison entre la valeur d'accumulation actuellement calculée et la valeur d'accumulation précédemment calculée.

4.  Appareil pour recevoir un signal multiplexé par répartition de fréquence orthogonale (OFDM) contenant des informations, un signal de numéro d'ordre de symbole et un signal de référence, le signal de numéro d'ordre de symbole représentant une relation entre le signal OFDM et le signal de référence, l'appareil comprenant :

un moyen (21) pour recevoir un signal OFDM via une ligne de transmission (14) ;

un moyen pour générer un signal de synchronisation de symbole en réponse au signal OFDM reçu ;

un moyen (30) pour établir une fenêtre temporelle pour chaque symbole en réponse au signal de synchronisation de symbole généré ;

un moyen (301) pour extraire un segment temporel du signal OFDM reçu qui s'étend dans la fenêtre temporelle ;

un moyen (311) pour soumettre le segment temporel extrait du signal OFDM reçu à une transformée de Fourier discrète pour reconstituer les informations transmises et un signal de numéro d'ordre de symbole ;

un moyen (312) pour reconstituer le signal de référence à partir du résultat de la transformée de Fourier discrète en réponse au signal de numéro d'ordre de symbole ;

un moyen (312) pour calculer périodiquement des coefficients représentatifs des caractéristiques de la ligne de transmission à partir du signal de référence reconstitué, les coefficients calculés incluant des coefficients qui indiquent une vitesse de transfert d'informations à partir d'une partie réelle d'une porteuse côté émetteur à une partie réelle d'une porteuse côté récepteur, une vitesse de transfert d'informations à partir d'une partie imaginaire de la porteuse côté émetteur à partie imaginaire de la porteuse côté récepteur, un taux de perte d'informations à partir de la partie réelle de la porteuse côté émetteur à la partie imaginaire de la porteuse côté récepteur, et un taux de perte d'informations à partir de la partie imaginaire de la porteuse côté émetteur à la partie réelle de la porteuse côté récepteur ; l'appareil étant de plus **caractérisé par** :

un moyen (314) pour calculer périodiquement des différences de phase approchées entre les porteuses dont des paires respectives parmi les porteuses du signal OFDM reçu sur la base de coefficients calculés ;

un moyen (314) pour calculer périodiquement une valeur d'accumulation des différences de phase approchées calculées ;

un moyen (314) pour comparer la valeur d'accumulation actuellement calculée et la valeur d'accumulation précédemment calculée ; et

un moyen (313, 302) pour commander la phase de la fenêtre temporelle par rapport à un symbole en réponse aux résultats de la comparaison entre la valeur d'accumulation actuellement calculée et la valeur d'accumulation précédemment calculée.

## FIG. 1

SIGNAL
LEVEL

TIME

## FIG. 2

SYMBOL n−1     SYMBOL n     SYMBOL n+1

ts
EFFECTIVE
SYMBOL INTERVAL

TIME

gi GUARD INTERVAL

ta
SYMBOL INTERVAL

# FIG. 3

EP 0 930 751 B1

# FIG. 4

EP 0 930 751 B1

# FIG. 5

EP 0 930 751 B1

*FIG. 6*

I' → 311 DFT CIRCUIT

R0, I0 → 312 CORRECTIVE CIRCUIT

R, I → TO OUTPUT CIRCUIT 32

31

COEFFICIENT

314 CALCULATION CIRCUIT

SYMBOL NUMBER

313 CONTROL CIRCUIT

Q'

ADVANCING PULSE

RETARDING PULSE

SAMPLE CLOCK SIGNAL

## FIG. 7

## FIG. 8

# FIG. 9

SYMBOL SYNC SIGNAL

SAMPLE CLOCK SIGNAL

524 CLOCK PULSES

STARTING PULSE

DIGITAL DATA SEQUENCE  |524| 1 | 2 | 3 | 4 | ------- |512|513| ----- |524| 1 | 2 | 3 |

TRANSMITTED DATA

SIGNAL INTERVAL

GUARD INTERVAL

SYMBOL n

EFFECTIVE SYMBOL INTERVAL

DELAYED STARTING PULSE

TIME

EP 0 930 751 B1

# FIG. 10

STARTING PULSE

302

3021

3022

3023

512 FREQUENCY DIVIDER

SHIFT REGISTER

SELECTOR

UP

DOWN

ADVANCING PULSE

RETARDING PULSE

SAMPLE CLOCK SIGNAL

SYMBOL SYNC SIGNAL

# FIG. 11

START

ONE CYCLE OF SYMBOL NUMBER ? — 42

NO

YES

PHASE DIFFERENCE ACCUMULATIVE CALCULATION — 43

FIRST TIME ? — 44

YES

NO

PRESENT CALCULATION RESULT IS EQUAL TO OR SMALLER THAN PREVIOUS CALCULATION RESULT ? — 45

YES

NO

OUTPUT ADVANCING PULSE — 46

OUTPUT RETARDING PULSE — 47

END

# *FIG. 12*